# EUROPEAN PATENT SPECIFICATION

(11) **EP 3 190 845 B1**
(45) Date of publication and mention of the grant of the patent: **14.11.2018**
(21) Application number: 14902766.6
(22) Date of filing: 26.09.2014
(51) Int. Cl.: H04W 72/12

(54) **UPLINK SIGNAL TRANSMISSION METHOD AND RELATED DEVICE**
UPLINK-SIGNALÜBERTRAGUNGSVERFAHREN UND ZUGEHÖRIGE VORRICHTUNG
PROCÉDÉ DE TRANSMISSION DE SIGNAL EN LIAISON MONTANTE, ET DISPOSITIF ASSOCIÉ

(43) Date of publication of application: 12.07.2017
(60) Divisional application: 18191684.2
(73) Proprietor: Huawei Technologies Co., Ltd., Longgang District Shenzhen, Guangdong 518129 (CN)
(72) Inventor: MIAO, Jinhua, Shenzhen Guangdong 518129 (CN); QUAN, Wei, Shenzhen Guangdong 518129 (CN); LI, Bingzhao, Shenzhen Guangdong 518129 (CN); ZHANG, Jian, Shenzhen Guangdong 518129 (CN); YANG, Xiaodong, Shenzhen Guangdong 518129 (CN)
(74) Representative: Maiwald Patent- und Rechtsanwaltsgesellschaft mbH
(86) International application number: PCT/CN2014/087577
(87) International publication number: WO 2016/045099

(56) References cited:
- WO-A1-2013/179270
- CN-A- 102 232 307
- CN-A- 102 917 456
- CN-A- 103 069 882
- CN-A- 103 188 711
- CN-A- 103 517 456
- US-A1- 2014 112 289

## Description

### TECHNICAL FIELD

Embodiments of the present invention relate to the communications field, and in particular, to an uplink signal transmission method and a related device.

### BACKGROUND

With rapid development of a packet service and an intelligent terminal, a high-speed service with a large data amount has an increasing requirement for a spectrum. According to the recently issued FCC International Spectrum White Paper, there are more unlicensed spectrum resources than licensed spectrum resources. An unlicensed spectrum includes a band used by an industrial, scientific, and medical (ISM, industrial, scientific and medical) device or the like. For example, there are three bands including 902-928 MHz, 2400-2484.5 MHz, and 5725-5850 MHz in the United States, and 2.4 GHz is a common ISM band of all countries. Main technologies used on the ISM band are wireless fidelity (WiFi, Wireless Fidelity), Bluetooth (Bluetooth), Zigbee (Zigbee), and the like, and WiFi is referred to as a wireless local area network (WLAN, wireless local network). WiFi is based on the Institute of Electrical and Electronics Engineers (IEEE, Institute of Electrical and Electronics Engineers) 802.11 family of standards, for example, 802.11a, 802.11n, and 802.11ac.
US 20140112289 A1 describes a method for transmitting a signal to an unlicensed band of a base station in a wireless communication system. The therein described method comprises the steps of: transmitting at least one of a preamble and a reservation signal, if it is determined through carrier sensing that the unlicensed band is available; and transmitting a PDSCH on the unlicensed band immediately after the transmission of at least one of the preamble and the reservation signal.

Generally, the unlicensed spectrum is not applicable to an LTE (Long Term Evolution, Long Term Evolution) system. However, with introduction of a CA (Carrier Aggregation, carrier aggregation) technology, the unlicensed spectrum can be introduced to the LTE system, that is, a U-LTE technology. Currently, a downlink transmission technology is already used in U-LTE, but a solution for performing uplink transmission by using an unlicensed frequency is not yet used.

### SUMMARY

To resolve a technical problem, embodiments of the present invention provide an uplink signal transmission method and a radio access network device as defined by the independent claims, so as to implement uplink transmission on an unlicensed band. Further embodiments are provided by the dependent claims. Embodiments provided by the description not falling under the scope of the claims are provided for explanatory purpose only.

To resolve the foregoing technical problem, a first aspect of the embodiments of the present invention provides an uplink signal transmission method, including:
when detecting, by listening, that an unlicensed band is in an idle state, determining, by a radio access network device, an available subframe on the unlicensed band, where the available subframe includes a subframe n;
sending, by the radio access network device, an uplink scheduling instruction to user equipment in the subframe n by using the unlicensed band, where the uplink scheduling instruction is used to instruct the user equipment to send an uplink signal in a subframe n+i by using the unlicensed band or a licensed band, n and i are integers, n≥0, and i≥1; and
receiving, by the radio access network device in the subframe n+i by using a band corresponding to the uplink scheduling instruction, the uplink signal sent by the user equipment; wherein i is notified by the radio access network device to the user equipment by using signaling; or i is notified to the user equipment by using the uplink scheduling instruction.

With reference to the first aspect, in a first possible implementation manner, the determining an available subframe on the unlicensed band includes:
determining an available time interval on the unlicensed band; and
determining the available subframe on the unlicensed band according to the time interval.

With reference to the first aspect or the first possible implementation manner, in a second possible implementation manner, if the available subframe includes the subframe n+i, the uplink scheduling instruction is a first uplink scheduling instruction, and the first uplink scheduling instruction is used to instruct the user equipment to send the uplink signal in the subframe n+i by using the unlicensed band.

A second aspect of the embodiments of the present invention provides an uplink signal transmission method, including:
receiving, by user equipment in a subframe n, an uplink scheduling instruction sent by a radio access network device by using an unlicensed band, where the uplink scheduling instruction is used to instruct the user equipment to send an uplink signal in a subframe n+i by using the unlicensed band or a licensed band, n and i are integers, n≥0, and i≥1; and
sending, by the user equipment, the uplink signal to the radio access network device in the subframe n+i according to the uplink scheduling instruction and by using a band corresponding to the uplink scheduling instruction; wherein i is notified by the radio access network device to the user equipment by using signaling; or i is notified to the user equipment by using the uplink scheduling instruction.

With reference to the second aspect, in a first possible implementation manner, the sending, by the user equipment, the uplink signal to the radio access network device in the subframe n+i according to the uplink scheduling instruction and by using a band corresponding to the uplink scheduling instruction includes:
if the uplink scheduling instruction is a first uplink scheduling instruction, sending, by the user equipment, the uplink signal to the radio access network device in the subframe n+i by using the unlicensed band, where
the first uplink scheduling instruction is used to instruct the user equipment to send the uplink signal in the subframe n+i by using the unlicensed band.

With reference to the second aspect, in a third possible implementation manner, the uplink scheduling instruction includes a duration indication, and the duration indication is used to indicate an available time interval on the unlicensed band, a quantity of an available subframe, or a number of the available subframe; and
the sending, by the user equipment, the uplink signal to the radio access network device in the subframe n+i according to the uplink scheduling instruction and by using a band corresponding to the uplink scheduling instruction further includes:
determining, by the user equipment, an available subframe on the unlicensed band according to the duration indication;
if the available subframe includes the subframe n+i, sending, by the user equipment, the uplink signal to the radio access network device in the subframe n+i by using the unlicensed band; and/or
if the available subframe does not include the subframe n+i, sending, by the user equipment, the uplink signal to the radio access network device in the subframe n+i by using the licensed band.

With reference to any one of the second aspect, or the first to the fourth possible implementation manners of the second aspect, in a fifth possible implementation manner, the uplink scheduling instruction includes a feedback information sending instruction, the feedback information sending instruction is used to instruct the user equipment to receive, in a subframe n+i+j by using the unlicensed band or the licensed band, feedback information corresponding to the uplink signal, j is an integer, and j≥1; and
the method further includes:
receiving, by the user equipment, the feedback information in the subframe n+i+j by using a band corresponding to the feedback information sending instruction, where j is an integer, and j≥1.

A third aspect of the embodiments of the present invention provides a radio access network device, including:
a monitoring module, configured to: when detecting, by listening, that an unlicensed band is in an idle state, determine an available subframe on the unlicensed band, where the available subframe includes a subframe n;
an indication module, configured to send an uplink scheduling instruction to user equipment in the subframe n by using the unlicensed band, where the uplink scheduling instruction is used to instruct the user equipment to send an uplink signal in a subframe n+i by using the unlicensed band or a licensed band, n and i are integers, n≥0, and i≥1; and
a receiving module, configured to receive, in the subframe n+i by using a band corresponding to the uplink scheduling instruction, the uplink signal sent by the user equipment; wherein i is notified by the radio access network device to the user equipment by using signaling; or i is notified to the user equipment by using the uplink scheduling instruction.

With reference to the third aspect, in a first possible implementation manner, the monitoring module is configured to: determine an available time interval on the unlicensed band; and
determine the available subframe on the unlicensed band according to the time interval.

With reference to the third aspect or the first possible implementation manner, in a second possible implementation manner, if the available subframe includes the subframe n+i, the uplink scheduling instruction is a first uplink scheduling instruction, and the first uplink scheduling instruction is used to instruct the user equipment to send the uplink signal in the subframe n+i by using the unlicensed band.

With reference to any one of the third aspect, or the first to the fourth possible implementation manners of the third aspect, in a fifth possible implementation manner, the radio access network device further includes:
a first feedback sending module, configured to: decode the uplink signal, generate feedback information according to a decoding result, and if the available subframe includes a subframe n+i+j, send the feedback information to the user equipment in the subframe n+i+j by using the unlicensed band, where j is an integer, and j≥1.

A fourth aspect of the embodiments of the present invention provides user equipment, including:
an instruction receiving module, configured to receive, in a subframe n, an uplink scheduling instruction sent by a radio access network device by using an unlicensed band, where the uplink scheduling instruction is used to instruct the user equipment to send an uplink signal in a subframe n+i by using the unlicensed band or a licensed band, n and i are integers, n≥0, and i≥1; and
an uplink sending module, configured to send the uplink signal to the radio access network device in the subframe n+i according to the uplink scheduling instruction and by using a band corresponding to the uplink scheduling instruction; wherein i is notified by the radio access network device to the user equipment by using signaling; or i is notified to the user equipment by using the uplink scheduling instruction.

With reference to the fourth aspect, in a first possible implementation manner, the uplink sending module is configured to: if the uplink scheduling instruction is a first uplink scheduling instruction, send the uplink signal to the radio access network device in the subframe n+i by using the unlicensed band, where
the first uplink scheduling instruction is used to instruct the user equipment to send the uplink signal in the subframe n+i by using the unlicensed band.

With reference to the fourth aspect, in a third possible implementation manner, the uplink scheduling instruction includes a duration indication, and the duration indication is used to indicate an available time interval on the unlicensed band, a quantity of an available subframe, or a number of the available subframe; and
the uplink sending module is further configured to:
determine an available subframe on the unlicensed band according to the duration indication;
if the available subframe includes the subframe n+i, send the uplink signal to the radio access network device in the subframe n+i by using the unlicensed band; and/or
if the available subframe does not include the subframe n+i, send the uplink signal to the radio access network device in the subframe n+i by using the licensed band.

With reference to any one of the fourth aspect, or the first to the fourth possible implementation manners of the fourth aspect, in a fifth possible implementation manner, the uplink scheduling instruction includes a feedback information sending instruction, the feedback information sending instruction is used to instruct the user equipment to receive, in a subframe n+i+j by using the unlicensed band or the licensed band, feedback information corresponding to the uplink signal, j is an integer, and j≥1; and
the user equipment further includes:
a first feedback receiving module, configured to receive the feedback information in the subframe n+i+j by using a band corresponding to the feedback information sending instruction, where j is an integer, and j≥1.

Implementation of the present invention brings the following beneficial effects:

When detecting, by listening, that an unlicensed band is in an idle state, a radio access network device determines an available subframe on the unlicensed band; the radio access network device sends, by using the unlicensed band, an uplink scheduling instruction in a subframe n that belongs to the available subframe, where the uplink scheduling instruction is used to instruct user equipment to send an uplink signal in a subframe n+i by using the unlicensed band or a licensed band; and the radio access network device receives, in the subframe n+i by using a band corresponding to the uplink scheduling instruction, the uplink signal sent by the user equipment. According to the foregoing method, the uplink signal can be transmitted by using the unlicensed band.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an uplink signal transmission method according to an embodiment of the present invention;
FIG. 2 is a schematic diagram of a subframe configuration method according to an embodiment of the present invention;
FIG. 3 is a schematic diagram of a frame alignment operation according to an embodiment of the present invention;
FIG. 4 is another schematic flowchart of an uplink signal transmission method according to an embodiment of the present invention;
FIG. 5 is a schematic structural diagram of a radio access network device according to an embodiment of the present invention; and
FIG. 6 is a schematic structural diagram of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

In addition, aspects or features of the present invention may be implemented as a method, an apparatus or a product that uses standard programming and/or engineering technologies. The term "product" used in this application covers a computer program that can be accessed from any computer-readable component, carrier or medium. For example, the computer-readable medium may include but be not limited to: a magnetic storage component (for example, a hard disk, a floppy disk, or a magnetic tape), an optical disc (for example, a CD (Compact Disk, compact disk), a DVD (Digital Versatile Disk, digital versatile disk), a smart card and a flash memory component (for example, EPROM (Erasable Programmable Read-Only Memory, erasable programmable read-only memory), a card, a stick, or a key drive). In addition, various storage media described in this specification may indicate one or more devices and/or other machine-readable media that are used to store information. The term "machine-readable media" may include but be not limited to a radio channel, and various other media that can store, contain and/or carry an instruction and/or data.

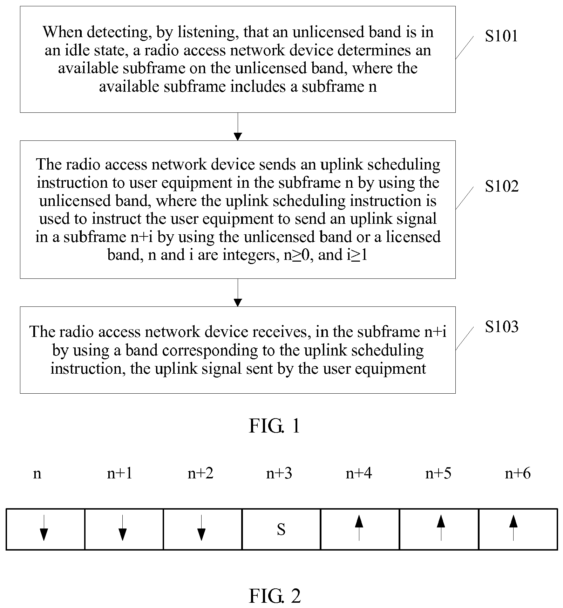

Referring to FIG. 1, FIG. 1 is a schematic flowchart of an uplink signal transmission method according to an embodiment of the present invention. In this embodiment of the present invention, the method includes the following steps.

S101. When detecting, by listening, that an unlicensed band is in an idle state, a radio access network device determines an available subframe on the unlicensed band, where the available subframe includes a subframe n.

Specifically, because the unlicensed band may be used without requiring a license, a device using the unlicensed band needs to obtain a permission of use by using a contention method. In this embodiment of the present invention, the radio access network device may be an evolved NodeB eNB in an LTE (Long Term Evolution, Long Term Evolution) communications system, and the unlicensed band may be a part of a band on an unlicensed spectrum, or may be an entire band on an unlicensed spectrum. The radio access network device detects, by listening, whether the unlicensed band is in an idle state, and if the unlicensed band is in an idle state, it indicates that the unlicensed band is not occupied by another device, and the radio access network device may transmit data by using the unlicensed band. A method for detecting, by listening, whether an unlicensed band is in an idle state may be: when learning, by means of measurement, that receive power on the unlicensed band is less than a preset power threshold for a lasting period of time, the radio access network device determines that the unlicensed band is in an idle state; or when learning, by means of measurement, that receive power on the unlicensed band is not less than a preset power threshold, an unlicensed spectrum channel is in a busy state. When detecting, by listening, that the unlicensed band is in an idle state, the radio access network device determines the available subframe on the unlicensed band. The available subframe on the unlicensed band refers to a subframe on the unlicensed band that is in an idle state within duration of the subframe, and the available subframe on the unlicensed band includes at least one subframe. The radio access network device and user equipment may transmit an uplink signal or a downlink signal in the available subframe by using the unlicensed band. The available subframe on the unlicensed band includes the subframe n, and the subframe n may be any subframe of LTE radio frames configured by the radio access network device. For example, the radio access network device detects, by listening, that an unlicensed band f1-f2 is in an idle state, f1=5.35 GHz, and f2=5.47GHz. Assuming that a moment at which the radio access network device detects, by listening, that the unlicensed band is in an idle state is a start moment of a subframe 0 of the first LTE radio frame, the radio access network device determines that the available subframe on the unlicensed band is the subframe 0 to a subframe 7 of the first LTE radio frame, which include eight subframes in total. Assuming that the subframe n is a subframe 0 of a first radio frame, the subframe 0 belongs to the available subframe on the unlicensed band.

S102. The radio access network device sends an uplink scheduling instruction to user equipment in the subframe n by using the unlicensed band, where the uplink scheduling instruction is used to instruct the user equipment to send an uplink signal in a subframe n+i by using the unlicensed band or a licensed band, n and i are integers, n≥0, and i≥0.

Specifically, the available subframe on the unlicensed band includes the subframe n. The radio access network device sends the uplink scheduling instruction to the user equipment in the subframe n by using the unlicensed band. The uplink scheduling instruction is used to instruct the user equipment to send the uplink signal in the subframe n+i by using the unlicensed band or the licensed band. For example, the radio access network device determines, according to whether the subframe n+i belongs to the available subframe on the unlicensed band, to instruct the user equipment to send the uplink signal by using either the licensed band or the unlicensed band. If the subframe n+i belongs to the available subframe on the unlicensed band, the radio access network device instructs the user equipment to send the uplink signal in the subframe n+i by using the unlicensed band. If the subframe n+i does not belong to the available subframe on the unlicensed band, the radio access network device instructs the user equipment to send the uplink signal in the subframe n+i by using the licensed band.

For example, the subframe n is the subframe 0 of the first LTE radio frame. Assuming that i=4, the radio access network device instructs the user equipment to send the uplink signal in a subframe 4, and the available subframe on the unlicensed band includes the subframe 0 to the subframe 7. The radio access network device determines that the subframe 4 belongs to the available subframe on the unlicensed band, and the radio access network device instructs the user equipment to send the uplink signal in the subframe 4 by using the unlicensed band. Assuming that i=8, the radio access network device instructs the user equipment to send the uplink signal in a subframe 8, and the available subframe on the unlicensed band includes a subframe 1 to the subframe 7. The radio access network device determines that the subframe 8 does not belong to the available subframe on the unlicensed band, and the radio access network device instructs the user equipment to send the uplink signal in the subframe 8 by using the licensed band.

S103. The radio access network device receives, in the subframe n+i by using a band corresponding to the uplink scheduling instruction, the uplink signal sent by the user equipment.

Specifically, if the uplink scheduling instruction instructs the user equipment to send the uplink signal in the subframe n+i by using the unlicensed band, the radio access network device accordingly receives, in the subframe n+i by using the unlicensed band, the uplink signal sent by the user equipment. If the uplink scheduling instruction instructs the user equipment to send the uplink signal in the subframe n+i by using the licensed band, the radio access network device accordingly receives, in the subframe n+i by using the licensed band, the uplink signal sent by the user equipment. The uplink signal may be uplink service data, or may be uplink control information, and this is not limited in the present invention.

For example, if the radio access network device instructs the user equipment to send the uplink signal in the subframe 4 by using the unlicensed band, the radio access network device receives, in the subframe 4 by using the unlicensed band, the uplink signal sent by the user equipment. If the radio access network device instructs a user to send the uplink signal in the subframe 8 by using the licensed band, the radio access network device receives, in the subframe 8 by using the licensed band, the uplink signal sent by the user equipment.

In some embodiments of the present invention, optionally, the determining an available subframe on the unlicensed band includes:
determining an available time interval on the unlicensed band; and
determining the available subframe on the unlicensed band according to the time interval.

Specifically, when detecting, by listening, that the unlicensed band is in an idle state, the radio access network device needs to occupy the unlicensed band for a period of time, to prevent another device from preempting the unlicensed band. The radio access network device may determine the time interval on the unlicensed band according to a data amount of a to-be-transmitted uplink signal, and the radio access network device may transmit, within a time interval for occupying the unlicensed band, the uplink signal or the downlink signal by using the unlicensed band. The radio access network device determines the available subframe on the unlicensed band within the time interval according to the determined time interval, and the subframe n is the first full subframe in the available subframe or a downlink subframe following the first full subframe.

For example, the radio access network device is the eNB in the LTE communications system. When detecting, by listening, that the receive power on the unlicensed band is less than the preset power threshold at a moment t1 to a moment t2, the radio access network device determines that the unlicensed band is in an idle state, and the radio access network device determines that the unlicensed band is in an idle state in a time period from the moment t1 to the moment t2. Assuming that the radio access network device determines, according to a requirement of the communications system, that a time length for occupying the unlicensed band is 8 ms, the radio access network device determines that the time interval for occupying the unlicensed band is a time interval from the moment t2 to a moment t2+8 ms. The moment t2 is a start moment of the time interval, and the moment t2+8 ms is an end moment of the time interval. Assuming that the start moment t2 of the time interval is a start moment of the subframe n, and a length of each subframe is 1 ms, the radio access network device determines that the time interval includes eight available subframes, the subframe n is the first full subframe within the time interval, and the eight available subframes are the subframe n to a subframe n+7. In some embodiments of the present invention, optionally, if the available subframe includes the subframe n+i, the uplink scheduling instruction is a first uplink scheduling instruction, and the first uplink scheduling instruction is used to instruct the user equipment to send the uplink signal in the subframe n+i by using the unlicensed band.

Specifically, the subframe n+i is a subframe in which the user equipment sends the uplink signal. If the radio access network device determines that the subframe n+i belongs to the available subframe on the unlicensed band, the radio access network device sends the first uplink scheduling instruction to the user equipment, and a first scheduling instruction is used to instruct the user equipment to send the uplink signal in the subframe n+i by using the unlicensed band. For example, the available subframe on the unlicensed band includes the subframe n to the subframe n+7, which are eight subframes in total. Assuming that i=4, a subframe n+4 belongs to the available subframe on the unlicensed band. The radio access network device sends the first uplink scheduling instruction to the user equipment, and the first uplink scheduling instruction is used to instruct the user equipment to send the uplink signal in the subframe n+4 by using the unlicensed band. After receiving the first uplink scheduling instruction, the user equipment sends the uplink signal in the subframe n+4 by using the unlicensed band.

Optionally, in some embodiments of the present invention, if the available subframe does not include the frame n+i, the uplink scheduling instruction is a second uplink scheduling instruction, and the second uplink scheduling instruction is used to instruct the user equipment to send the uplink signal in the subframe n+i by using the licensed band.

Specifically, if the radio access network device determines that the subframe n+i does not belong to the available subframe on the unlicensed band, the radio access network device sends the second uplink scheduling instruction to the user equipment, and the second uplink scheduling instruction is used to instruct the user equipment to send the uplink signal in the subframe n+i by using the licensed band. For example, the available subframe on the unlicensed band includes the subframe n to the subframe n+7, which are eight subframes in total. Assuming that i=8, a subframe n+8 does not belong to the available subframe on the unlicensed band. The radio access network device sends the second uplink scheduling instruction to the user equipment, and the second uplink scheduling instruction is used to instruct the user equipment to send the uplink signal in the subframe n+8 by using the unlicensed band. After receiving the second uplink scheduling instruction, the user equipment sends the uplink signal in the subframe n+8 by using the licensed band.

Optionally, in some embodiments of the present invention, i is a predetermined value known by both the radio access network device and the user equipment; or
i is notified by the radio access network device to the user equipment by using signaling; or
i is notified to the user equipment by using the uplink scheduling instruction.

Specifically, the radio access network device sends the uplink scheduling instruction in the subframe n, the uplink scheduling instruction is used to instruct the user equipment to send the uplink signal in the subframe n+i, and the parameter i may be set by the radio access network device and the user equipment according to a stipulation in a communication protocol. Alternatively, the uplink scheduling instruction carries the parameter i, the radio access network device sends the uplink scheduling instruction to the user equipment, and the user equipment determines, according to the parameter i carried in the uplink scheduling instruction, a subframe number n+i for sending the uplink signal. Alternatively, the radio access network device sends, to the user equipment, signaling that carries the parameter i, and the user equipment determines, according to the parameter i in the signaling, a subframe number n+i for sending the uplink signal. For example, a value of i may be configured by using RRC (Radio Resource Control, radio resource control) signaling, MAC (Media Access Control, Media Access Control) signaling, or PHY (Physical Layer, physical layer) signaling.

Optionally, in some embodiments of the present invention, the method further includes:
decoding, by the radio access network device, the uplink signal, generating feedback information according to a decoding result, and if the available subframe includes a subframe n+i+j, sending the feedback information to the user equipment in the subframe n+i+j by using the unlicensed band, where j is an integer, and j≥1.

Specifically, the radio access network device decodes the uplink signal sent by the user equipment in the subframe n+i, and generates the feedback information according to the decoding result. The feedback information includes acknowledgement feedback information and negative acknowledgement feedback information. If the decoding succeeds, the acknowledgement feedback information is generated, and the radio access network device sends the acknowledgement feedback information ACK (Acknowledgement) to the user equipment in the subframe n+i+j. If the decoding fails, the negative acknowledgement feedback information is generated, and the radio access network device sends the negative acknowledgement feedback information NACK (Negative Acknowledgement) to the user equipment in the subframe n+i+j. Before sending the feedback information to the user equipment, the radio access network device determines whether the subframe n+i+j for sending the feedback information belongs to the available subframe on the unlicensed band, and if the subframe n+i+j for sending the feedback information belongs to the available subframe on the unlicensed band, the radio access network device sends the acknowledgement feedback information or the negative acknowledgement feedback information to the user equipment in the subframe n+i+j by using the unlicensed band.

For example, it is assumed that i=2, j=2, and the available subframe on the unlicensed band is the subframe n to the subframe n+7. The radio access network device performs CRC (Cyclical Redundancy Check, cyclic redundancy check) check on the uplink signal sent by the user equipment in a subframe n+2 by using the unlicensed band. If the check succeeds, the acknowledgement feedback information is generated, and the radio access network device determines that a subframe n+4 for sending the acknowledgement feedback information belongs to a subframe on the unlicensed band, and sends the ACK to the user equipment in the subframe n+4 by using the unlicensed band.

Optionally, in some embodiments of the present invention, the method further includes:
if the subframe n+i+j falls beyond the time interval, sending the feedback information in the subframe n+i+j by using the licensed band; or
if the subframe n+i+j falls beyond the time interval, skipping sending the feedback information to the user equipment in the subframe n+i+j.

Specifically, the time interval is a time interval that is for occupying the unlicensed band and that is determined when the radio access network device detects, by listening, that the unlicensed band is in an idle state, and the time interval includes the available subframe on the unlicensed band. If the radio access network device determines that the subframe n+i+j falls beyond the time interval, it indicates that the subframe n+i+j does not belong to the available subframe on the unlicensed band, and the radio access network device sends the feedback information in the subframe n+i+j by using the licensed band; or the radio access network device does not send the feedback information to the user equipment in the subframe n+i+j.

For example, it is assumed that i=4, j=4, and the time interval includes the subframe n to the subframe n+7. If the radio access network device determines that a subframe n+8 for sending the feedback information falls beyond the time interval, the radio access network device sends the feedback information in the subframe n+8 by using the licensed band; or the radio access network device does not send the feedback information in the subframe n+8.

Optionally, in some embodiments of the present invention, the uplink scheduling instruction includes a feedback information sending instruction, and the feedback information sending instruction is used to instruct the user equipment to receive, in the subframe n+i+j by using the unlicensed band or the licensed band, feedback information corresponding to the uplink signal.

Specifically, when the radio access network device sends the uplink scheduling instruction to the user equipment in the subframe n, the uplink scheduling instruction carries the feedback information sending instruction, and the feedback information sending instruction is used to instruct the user equipment to receive, in the subframe n+i+j by using the unlicensed band or the licensed band, a feedback signal corresponding to the uplink signal. If the subframe n+i+j does not belong to the available subframe on the unlicensed band, the uplink scheduling instruction sent by the radio access network device in the subframe n carries a first feedback information sending instruction, and the first feedback information sending instruction is used to instruct the user equipment to receive, in the subframe n+i+j by using the licensed band, the feedback signal corresponding to the uplink signal. If the subframe n+i+j belongs to the available subframe on the unlicensed band, the uplink scheduling instruction sent by the radio access network device in the subframe carries a second feedback information sending instruction, and the second feedback information sending instruction is used to instruct the user equipment to receive, in the subframe n+i+j by using the unlicensed band, the feedback signal corresponding to the uplink signal.

Optionally, in some embodiments of the present invention, the method further includes:
decoding, by the radio access network device, the uplink signal, and generating the feedback information according to a decoding result; and
sending the feedback information to the user equipment in a subframe n+i+j by using the licensed band, where j is an integer, and j≥1.

Specifically, the radio access network device does not determine whether the subframe n+i+j belongs to the available subframe on the unlicensed band, and after decoding the uplink signal sent by the user equipment in the subframe n+i, and generating the feedback information according to the decoding result, sends the feedback information to the user equipment in the subframe n+i+j by using the licensed band.

Optionally, in some embodiments of the present invention, if the feedback information is negative acknowledgement feedback information NACK, the NACK carries a subframe number for retransmitting the uplink signal and a status identifier of the unlicensed band in a subframe corresponding to the subframe number.

Specifically, the radio access network device decodes the uplink signal sent by the user equipment in the subframe n. If the decoding fails, a negative acknowledgement feedback signal NACK is generated, and the NACK carries the subframe number for retransmitting data of the uplink signal and the status identifier of the unlicensed band in the subframe corresponding to the subframe number. After receiving the NACK, the user equipment determines the subframe number for retransmitting the uplink signal, and determines, according to the status identifier, whether the subframe corresponding to the subframe number belongs to the available subframe on the unlicensed band. If the subframe corresponding to the subframe number belongs to the available subframe on the unlicensed band, the user equipment retransmits, by using the unlicensed band, the uplink signal in the subframe corresponding to the subframe number. If the subframe corresponding to the subframe number does not belong to the available subframe on the unlicensed band, the user equipment retransmits, by using the licensed band, the uplink signal in the subframe corresponding to the subframe number.

For example, the radio access network device decodes the uplink signal sent by the user equipment. If the decoding fails, the NACK is generated, and the NACK carries a subframe number n+12 for retransmitting the uplink signal by the user equipment and a status identifier "1" of the unlicensed band in a subframe n+12. The status identifier "1" indicates an available state, and a status identifier "0" indicates an unavailable state. The user equipment receives the NACK, and when the subframe n+12 arrives, retransmits the uplink signal by using the unlicensed band.

Optionally, in some embodiments of the present invention, j is a predetermined value known by both the radio access network device and the user equipment; or
j is notified by the radio access network device to the user equipment by using signaling; or
j is notified to the user equipment by using the uplink scheduling instruction.

Specifically, the parameter j may be set by the radio access network device and the user equipment according to a stipulation in a communication protocol. Alternatively, the uplink scheduling instruction carries the parameter j, and the radio access network device sends the uplink scheduling instruction to the user equipment to notify the user equipment of the parameter j. Alternatively, the radio access network device sends, to the user equipment, signaling that carries the parameter j, to notify the user equipment of the parameter j. For example, a value of j may be configured by using RRC (Radio Resource Control, radio resource control) signaling, MAC (Media Access Control, Media Access Control) signaling, or PHY (Physical Layer, physical layer) signaling.

Optionally, in some embodiments of the present invention, the uplink scheduling instruction includes a duration indication, and the duration indication is used to indicate the available time interval on the unlicensed band, a quantity of an available subframe, or a number of the available subframe.

Specifically, the uplink scheduling instruction may further include the duration indication, and the duration indication is used to indicate the available time interval on the unlicensed band, the quantity of an available subframe, and the number of the available subframe. When receiving or sending a signal in a subframe, the user equipment may determine, according to the duration indication, whether the subframe belongs to the available subframe on the unlicensed band. For example, when detecting, by listening, that the unlicensed band is in an idle state, the radio access network device determines that the time interval for occupying the unlicensed band is the time interval from the moment t2 to the moment t2+8 ms. The moment t2 is the start moment of the subframe n, the quantity of available subframes is 8, and the numbers of the available subframes are the subframe n to the subframe n+7.

Optionally, in some embodiments of the present invention, the uplink scheduling instruction is a random access instruction, and the uplink signal is a preamble preamble sequence; or
the uplink scheduling instruction is an uplink grant UL Grant, and the uplink signal is uplink data.

Specifically, the uplink scheduling instruction is the random access instruction, the random access instruction is used to instruct the user equipment to execute a random access procedure, and the user equipment may initiate the random access procedure when performing an operation such as uplink synchronization or positioning.

In some embodiments of the present invention, a method for controlling user equipment to perform random access may be: the radio access network device sends the uplink scheduling instruction to the user equipment in the subframe n by using the unlicensed band, the uplink scheduling instruction is the random access instruction, and the random access instruction is used to instruct the user equipment to send the preamble preamble sequence. If the random access instruction instructs the user equipment to use the unlicensed band, the user equipment sends the preamble sequence in a subframe n+k by using the unlicensed band. If the random access instruction instructs the user equipment to use the licensed band, the user equipment sends, by using the licensed band, the preamble sequence after finding an available physical-layer random access channel in a subframe following the subframe n+k (where k is greater than or equal to 6). The radio access network device performs calculation according to the preamble sequence sent by the user equipment in the subframe n+k by using the licensed band or the unlicensed band, and a calculation result includes a timing advance and the like. The radio access network device sends a random access response including the calculation result to the user equipment in a subframe n+k+1, so that the user equipment implements uplink synchronization by adjusting a sending moment of the user equipment according to the random access response. Alternatively, the radio access network device calculates a geographical location of the user equipment according to the calculation result, to execute a positioning process.

Optionally, when sending the preamble sequence on the unlicensed band, the user equipment may use a preconfigured physical-layer random access channel, and the preconfigured physical-layer access channel may be indicated by using a broadcast message, dedicated RRC signaling, or the random access instruction.

It should be noted that, if the subframe n+k is the available subframe on the unlicensed band, the user equipment immediately sends the preamble sequence in the subframe n+k by using the physical-layer random access channel on the unlicensed band. Therefore, the user equipment sends the preamble sequence on an available physical-layer random access channel resource selected from the subframe n+k (k≥6). A location indication of the physical-layer random access channel resource may be included in the UL grant, the indication information, or an RRC message sent by a base station.

Optionally, after the user equipment executes the random access procedure, the radio access network device determines whether a subframe m belongs to the available subframe on the unlicensed band, and m>n+k+1. If the subframe m belongs to the available subframe on the unlicensed band, the radio access network device sends the uplink grant UL grant including the time interval to the user equipment in the subframe m by using the unlicensed band, so that the user equipment determines, according to the time interval, whether a subframe m+i falls within the time interval, and if the subframe m+i falls within the time interval, sends the uplink signal to the radio access network device in the subframe m+i by using the unlicensed band. For subsequent steps, refer to S102 and S103. Details are not described herein.

Optionally, in some embodiments of the present invention, a subframe n-k is the first full subframe within the time interval, k is an integer, and k≥0. The method further includes:
if a start moment of the time interval is not a frame start moment, sending at least one padding padding symbol within a time period from the start moment of the time interval to a start moment of the subframe n-k.

The start moment of the time interval falls within a subframe n-k-1.

Specifically, a start moment of the time interval for occupying the unlicensed band is not a frame start moment of a subframe, but falls within the subframe. Assuming that the subframe is the subframe n-k-1, the radio access network device sends the at least one padding padding symbol within the time period from the start moment of the time interval to the start moment of the subframe N-k. The padding symbol may include a high-power symbol, a DL pilot signal, or a DL synchronization signal. If the radio access network device determines that the user equipment does not need to execute the random access procedure, the radio access network device continues to determine whether the subframe n within the time interval belongs to the available subframe on the unlicensed band. If the subframe n within the time interval belongs to the available subframe on the unlicensed band, the radio access network device sends the UL grant in the subframe n by using the unlicensed band, and the UL grant carries the time interval for occupying the unlicensed band. For subsequent steps, refer to S102 and S103. Details are not described herein.

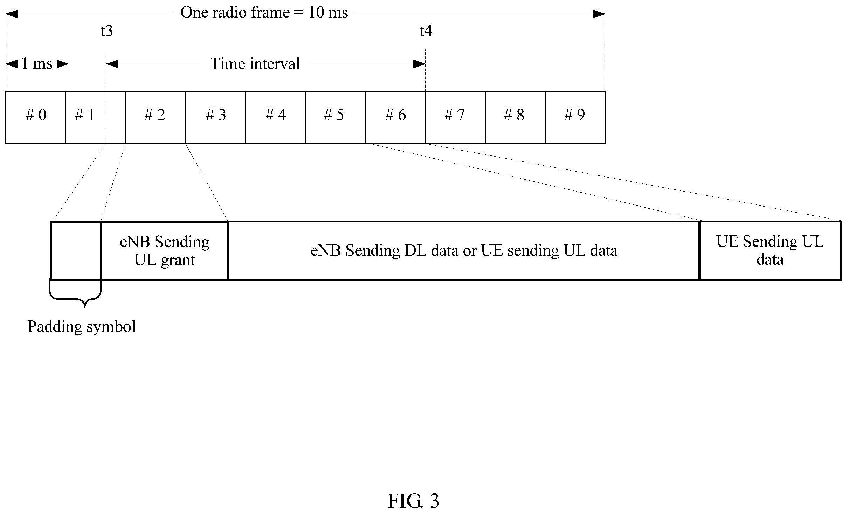

For example, FIG. 3 is a time sequence diagram of an uplink signal sending method according to an embodiment of the present invention. In FIG. 3, the radio access network device determines the time interval for occupying the unlicensed band, the start moment of the time interval is t3, and an end moment of the time interval is t4. It can be learned from FIG. 3 that the start moment t3 of the time interval is not a frame start moment, but is located in the middle of a subframe 1, the subframe n-k-1 is the subframe 1, and the subframe n-k is a subframe 2. In this case, a frame alignment operation needs to be performed, and the radio access network device broadcasts the padding symbol within a time period from the start moment t3 of the time interval to a start moment of the subframe 2, to implement frame alignment. In FIG. 3, full subframes included in the time interval include the subframe 2 to a subframe 6, which are six subframes in total. The subframe n is the first full subframe within the time interval, that is, the subframe 2. The radio access network device sends the uplink grant to the user equipment in the subframe 2 by using the unlicensed band, and the uplink grant is used to instruct the user equipment to send the uplink signal in the subframe 6 by using the unlicensed band.

Optionally, in some embodiments of the present invention, the available subframe includes consecutive subframes: the subframe n to the subframe n+i, and i≥2.

Before the radio access network device sends the uplink scheduling instruction to the user equipment in the subframe n by using the unlicensed band, the method further includes:
configuring, by the radio access network device, subframe types of the subframe n to the subframe n+i on the unlicensed spectrum for the user equipment.

If a subframe q-s is configured as the last downlink subframe preceding a subframe q, and a subframe q+t is configured as the first uplink subframe following the subframe q, at least one subframe of a subframe q-s+1 to a subframe q+t-1 is set as a special subframe, the special subframe includes a guard interval GP (Guard Period, GP for short, guard interval), n≤q-s<q<q+t≤n+i, q, s, and t are integers, s≥1, t≥1, and i≥s+t.

Specifically, the radio access network device configures the subframe types of the subframe n to the subframe n+i. If a subframe is configured as an uplink subframe, the user equipment may send the uplink signal in the uplink subframe. If a subframe is configured as a downlink subframe, the radio access network device may send the downlink signal in the downlink subframe. The radio access network device schedules data in the subframe n to the subframe n+i, to prevent another device from occupying the unlicensed band.

If a subframe q-s is configured as the last downlink subframe preceding a subframe q, and a subframe q+t is configured as the first uplink subframe following the subframe q, at least one subframe of a subframe q-s+1 to a subframe q+t-1 is set as a special subframe or a blank subframe, the special subframe includes a guard interval GP, n≤q-s<q<q+t≤n+i, q, s, and t are integers, s≥1, t≥1, and i≥s+t. A subframe format of the special subframe may be configured by using a system broadcast message or dedicated RRC signaling. A length of the GP may be set according to a distance between the user equipment and the radio access network device.

For example, assuming that i=7, q=n+3, s=1, t=2, and conditions under which n≤q-s<q<q+t≤n+i, q, s, and t are integers, s≥1, t≥1, and i≥s+t are met, the radio access network device configures the subframe n to the subframe n+7. If a subframe n+2 is configured as the last downlink subframe preceding a subframe n+3, and a subframe n+5 is configured as the first uplink subframe following the subframe n+3, at least one subframe of the subframe n+3 to a subframe n+4 is set as a special subframe or a blank subframe, and the special subframe includes a guard interval GP.

Optionally, in some embodiments of the present invention, the available subframe includes consecutive subframes: the subframe n to the subframe n+i, and i≥2.

Before the radio access network device sends the uplink scheduling instruction to the user equipment in the subframe n by using the unlicensed band, the method further includes:
configuring, by the radio access network device, subframe types of the subframe n to the subframe n+i on the unlicensed spectrum for the user equipment, where
q is the first subframe in at least one consecutive uplink subframe, q-1 is a special subframe, n<q-1<q≤n+i, and q is an integer.

For example, referring to FIG. 2, it is assumed that i=6, and the subframe n to a subframe n+6 fall within the time interval on the unlicensed band preempted by the radio access network device. The radio access network device sends the UL grant to the user equipment in the subframe n by using the unlicensed band, and instructs the user equipment to send the uplink signal in the subframe n+4, that is, the subframe n is a downlink subframe. The radio access network device configures a subframe type of a subframe following the subframe n. If the user equipment determines that the subframe n is a downlink subframe, and receives a scheduling indication indicating that the subframe n+4 is an uplink subframe, and the subframe n+4 is the first uplink subframe following the subframe n, the user equipment configures the subframe n+3 as a special subframe. Because distances between user equipments and the radio access network device are different, the radio access network device configures special subframes in different formats according to the different distances. For example, the radio access network device configures a length of a GP in a special subframe. Lengths of GPs in special subframes of the user equipments are different, and therefore, configuration of a special subframe is more flexible. The radio access network device may notify the user equipment of subframe configuration by using a broadcast message, dedicated RRC signaling, or a MAC CE.

It should be noted that the radio access network device classifies users with a same feature into one group, and the same feature may include path loss information, speed information, or the like. In addition, the base station divides the unlicensed band into different resource blocks (including an uplink resource block and a downlink resource block), different modulation and coding schemes, different version numbers, or the like. User equipments in a same group may sense and preempt the unlicensed band on a same resource block. The base station may send a notification message to user equipment in a group by using RRC signaling or a U-RNTI, and the user equipments in the same group have a same U-RNTI. The base station may add a U-RNTI to physical-layer control information by using the U-RNTI as a scrambling code, and the physical-layer control information may include physical resource information for data sending. When the user equipment can perform descrambling by using a U-RNTI of the user equipment, the user equipment obtains the physical resource information. A U-RNTI may be notified by using RRC signaling.

The base station may send RRC signaling or a MAC CE to a user by using the licensed band, to notify the user of a time for activating the unlicensed band. After an activation procedure is completed, the base station triggers the user equipment to preempt a service channel on the unlicensed band, or to sense a control channel on the unlicensed band, or to perform downlink measurement on the unlicensed band, or to send an SRS (Sounding Reference Signal) on the unlicensed band. The base station may send RRC signaling or a MAC CE to a user by using the licensed band, to notify the user of a time for deactivating the unlicensed band. After a deactivation procedure is completed, the user equipment UE no longer monitors the control channel on the unlicensed band, or does not perform downlink measurement, or does not send an SRS, or does not preempt the unlicensed band.

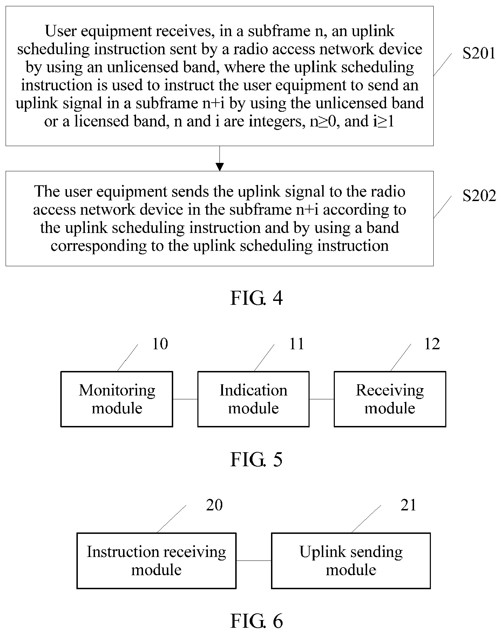

Referring to FIG. 4, FIG. 4 is a schematic flowchart of an uplink signal transmission method according to a second embodiment of the present invention. In this embodiment of the present invention, the method includes the following steps.

S201. User equipment receives, in a subframe n, an uplink scheduling instruction sent by a radio access network device by using an unlicensed band. The uplink scheduling instruction is used to instruct the user equipment to send an uplink signal in a subframe n+i by using the unlicensed band or a licensed band, n and i are integers, n≥0, and i≥1.

Specifically, when detecting, by listening, that the unlicensed band is in an idle state, the radio access network device needs to occupy the unlicensed band for a period of time, to prevent another device from preempting the unlicensed band. The radio access network device may set, according to a system requirement, a time length for occupying the unlicensed band. After determining a time interval for occupying the unlicensed band, the radio access network device and the user equipment may transmit an uplink signal or a downlink signal within the time interval by using the unlicensed band. The subframe n falls within the time interval. The user equipment receives, in the subframe n, the uplink scheduling instruction sent by the radio access network device by using the unlicensed band. The uplink scheduling instruction is used to instruct the user equipment to send the uplink signal in the subframe n+i by using the licensed band or the unlicensed band. The radio access network device determines, according to whether the subframe n+i falls within the time interval determined by the radio access network device, a type of a band used when the user equipment is instructed to send the uplink signal.

S202. The user equipment sends the uplink signal to the radio access network device in the subframe n+i according to the uplink scheduling instruction and by using a band corresponding to the uplink scheduling instruction.

Specifically, after receiving the uplink scheduling instruction, the user equipment determines a subframe location n+i in which the uplink signal is sent. If the uplink scheduling instruction instructs the user equipment to send the uplink signal in the subframe n+i by using the unlicensed band, when the subframe n+i arrives, the user equipment sends the uplink signal in the subframe n+i by using the unlicensed band. If the uplink scheduling instruction instructs the user equipment to send the uplink signal in the subframe n+i by using the licensed band, when the subframe n+i arrives, the user equipment sends the uplink signal in the subframe n+i by using the licensed band.

Optionally, in some embodiments of the present invention, that the user equipment sends the uplink signal to the radio access network device in the subframe n+i according to the uplink scheduling instruction and by using a band corresponding to the uplink scheduling instruction includes:
if the uplink scheduling instruction is a first uplink scheduling instruction, the user equipment sends the uplink signal to the radio access network device in the subframe n+i by using the unlicensed band.

The first uplink scheduling instruction is used to instruct the user equipment to send the uplink signal in the subframe n+i by using the unlicensed band.

Specifically, the radio access network device determines that the subframe n+i is an available subframe on the unlicensed band, that is, the subframe n+i falls within a time interval on the unlicensed band preempted by a radio access network. The radio access network device sends the first uplink scheduling instruction to the user equipment, and the first scheduling instruction is used to instruct the user equipment to send the uplink signal in the subframe n+i by using the unlicensed band. When detecting that the subframe n+i arrives, the user equipment sends the uplink signal in the subframe n+i by using the unlicensed band.

Optionally, in some embodiments of the present invention, that the user equipment sends the uplink signal to the radio access network device in the subframe n+i according to the uplink scheduling instruction and by using a band corresponding to the uplink scheduling instruction further includes:
if the uplink scheduling instruction is a second uplink scheduling instruction, the user equipment sends the uplink signal to the radio access network device in the subframe n+i by using the licensed band.

The second uplink scheduling instruction is used to instruct the user equipment to send the uplink signal in the subframe n+i by using the licensed band.

Specifically, the radio access network device determines that the subframe n+i does not belong to an available subframe on the unlicensed band, that is, the subframe n+i falls beyond a time interval on the unlicensed band preempted by the radio access network device. The radio access network device sends the second uplink scheduling instruction to the user equipment, and the second uplink scheduling instruction is used to instruct the user equipment to send the uplink signal in the subframe n+i by using the licensed band. When detecting that the subframe n+i arrives, the user equipment sends the uplink signal in the subframe n+i by using the licensed band.

Optionally, in some embodiments of the present invention, the uplink scheduling instruction includes a duration indication, and the duration indication is used to indicate an available time interval on the unlicensed band, a quantity of an available subframe, or a number of the available subframe.

That the user equipment sends the uplink signal to the radio access network device in the subframe n+i according to the uplink scheduling instruction and by using a band corresponding to the uplink scheduling instruction further includes:
the user equipment determines an available subframe on the unlicensed band according to the duration indication;
if the available subframe includes the subframe n+i, the user equipment sends the uplink signal to the radio access network device in the subframe n+i by using the unlicensed band; and/or
if the available subframe does not include the subframe n+i, the user equipment sends the uplink signal to the radio access network device in the subframe n+i by using the licensed band.

Specifically, the uplink scheduling instruction may further include the duration indication, and the duration indication is used to indicate the available time interval on the unlicensed band, the quantity of an available subframe, and the number of the available subframe. When receiving or sending a signal in a subframe, the user equipment may determine, according to the duration indication, whether the subframe belongs to the available subframe on the unlicensed band. For example, when detecting, by listening, that the unlicensed band is in an idle state, the radio access network device determines that the time interval for occupying the unlicensed band is a time interval from a moment t2 to a moment t2+8 ms. The moment t2 is a start moment of the subframe n, the quantity of available subframes is 8, and the numbers of the available subframes are the subframe n to a subframe n+7. Assuming that i=4, the user equipment determines that a subframe n+4 falls within the time interval, the subframe n+4 belongs to the available subframe on the unlicensed band, and the user equipment sends the uplink signal in the subframe n+4 by using the unlicensed band. Assuming that i=8, the user equipment determines that a subframe n+8 falls beyond the time interval, the subframe n+8 does not belong to the available subframe on the unlicensed band, and the user equipment sends the uplink signal in the subframe n+8 by using the licensed band.

Optionally, in some embodiments of the present invention, i is a predetermined value known by both the radio access network device and the user equipment; or
i is notified by the radio access network device by using signaling; or
i is notified to the user equipment by using the uplink scheduling instruction.

Specifically, the radio access network device sends the uplink scheduling instruction in the subframe n, the uplink scheduling instruction is used to instruct the user equipment to send the uplink signal in the subframe n+i, and the parameter i may be set by the radio access network device and the user equipment according to a stipulation in a communication protocol. Alternatively, the uplink scheduling instruction carries the parameter i, the radio access network device sends the uplink scheduling instruction to the user equipment, and the user equipment determines, according to the parameter i carried in the uplink scheduling instruction, a subframe number n+i for sending the uplink signal. Alternatively, the radio access network device sends, to the user equipment, signaling that carries the parameter i, and the user equipment determines, according to the parameter i in the signaling, a subframe number n+i for sending the uplink signal. For example, a value of i may be configured by using RRC (Radio Resource Control, radio resource control) signaling, MAC (Media Access Control, Media Access Control) signaling, or PHY (Physical Layer, physical layer) signaling.

Optionally, in some embodiments of the present invention, the uplink scheduling instruction includes a feedback information sending instruction, the feedback information sending instruction is used to instruct the user equipment to receive, in a subframe n+i+j by using the unlicensed band or the licensed band, feedback information corresponding to the uplink signal, j is an integer, and j≥1.

The method further includes:
receiving, by the user equipment, the feedback information in the subframe n+i+j by using a band corresponding to the feedback information sending instruction, where j is an integer, and j≥1.

Optionally, in some embodiments of the present invention, the method further includes:
receiving, by the user equipment in a subframe n+i+j by using the licensed band, feedback information corresponding to the uplink signal.

Specifically, when the radio access network device sends the uplink scheduling instruction to the user equipment in the subframe n, the uplink scheduling instruction carries the feedback information sending instruction, and the feedback information sending instruction is used to instruct the user equipment to receive, in the subframe n+i+j by using the unlicensed band or the licensed band, a feedback signal corresponding to the uplink signal. If the subframe n+i+j does not belong to the available subframe on the unlicensed band, the uplink scheduling instruction sent by the radio access network device in the subframe n carries a first feedback information sending instruction, and the first feedback information sending instruction is used to instruct the user equipment to receive, in the subframe n+i+j by using the licensed band, the feedback signal corresponding to the uplink signal. If the subframe n+i+j belongs to the available subframe on the unlicensed band, the uplink scheduling instruction sent by the radio access network device in the subframe n carries a second feedback information sending instruction, and the second feedback information sending instruction is used to instruct the user equipment to receive, in the subframe n+i+j by using the unlicensed band, the feedback signal corresponding to the uplink signal.

Optionally, in some embodiments of the present invention, the method further includes at least one of the following:
if the available subframe includes a subframe n+i+j, receiving, by the user equipment in the subframe n+i+j by using the unlicensed band, feedback information corresponding to the uplink signal;
if the available subframe does not include the subframe n+i+j, receiving, by the user equipment in the subframe n+i+j by using the licensed band, the feedback information corresponding to the uplink signal; and
if the available subframe does not include the subframe n+i+j, skipping receiving, by the user equipment in the subframe n+i+j, the feedback information corresponding to the uplink signal.

Optionally, in some embodiments of the present invention, the method further includes:
if the feedback information is negative acknowledgement feedback information NACK, obtaining, by the user equipment, a subframe number for retransmitting the uplink signal and a status identifier of the unlicensed spectrum resource in a subframe corresponding to the subframe number, where the subframe number and the status identifier are carried in the NACK; and
determining, by the user equipment according to the status identifier, whether the unlicensed band in the subframe corresponding to the subframe number is in an idle state, and if the unlicensed band in the subframe corresponding to the subframe number is in an idle state, retransmitting, by using the unlicensed band, the uplink signal in the subframe corresponding to the subframe number.

Specifically, the radio access network device decodes the uplink signal sent by the user equipment in the subframe n. If the decoding fails, a negative acknowledgement feedback signal NACK is generated, and the NACK carries the subframe number for retransmitting data of the uplink signal and the status identifier of the unlicensed band in the subframe corresponding to the subframe number. After receiving the NACK, the user equipment determines the subframe number for retransmitting the uplink signal, and determines, according to the status identifier, whether the subframe corresponding to the subframe number belongs to the available subframe on the unlicensed band. If the subframe corresponding to the subframe number belongs to the available subframe on the unlicensed band, the user equipment retransmits, by using the unlicensed band, the uplink signal in the subframe corresponding to the subframe number. If the subframe corresponding to the subframe number does not belong to the available subframe on the unlicensed band, the user equipment retransmits, by using the licensed band, the uplink signal in the subframe corresponding to the subframe number.

For example, the radio access network device decodes the uplink signal sent by the user equipment. If the decoding fails, the NACK is generated, and the NACK carries a subframe number n+12 for retransmitting the uplink signal by the user equipment and a status identifier "1" of the unlicensed band in a subframe n+12. The status identifier "1" indicates an idle state, and a status identifier "0" indicates an occupied state. The user equipment receives the NACK, and when the subframe n+12 arrives, retransmits the uplink signal by using the unlicensed band.

Optionally, in some embodiments of the present invention, the uplink scheduling instruction is a random access instruction, and the uplink signal is a preamble preamble sequence; or
the uplink scheduling instruction is an uplink grant UL Grant, and the uplink signal is uplink data.

Specifically, the uplink scheduling instruction is the random access instruction, and the random access instruction is used to instruct the user equipment to execute a random access procedure. The user equipment may initiate the random access procedure when performing an operation such as uplink synchronization or positioning. In some embodiments of the present invention, a method for controlling user equipment to perform random access may be: the radio access network device sends the uplink scheduling instruction to the user equipment in the subframe n by using the unlicensed band, the uplink scheduling instruction is the random access instruction, and the random access instruction is used to instruct the user equipment to send the preamble preamble sequence. If the random access instruction instructs the user equipment to use the licensed band, the user equipment sends, by using the licensed band, the preamble sequence after finding an available physical-layer random access channel in a subframe following a subframe n+k (where k is greater than or equal to 6). The radio access network device performs calculation according to the preamble sequence sent by the user equipment by using the licensed band or the unlicensed band, and a calculation result includes a timing advance and the like. The radio access network device sends a random access response including the calculation result to the user equipment in a subframe n+k+1, so that the user equipment implements uplink synchronization by adjusting a sending moment of the user equipment according to the random access response. Alternatively, the radio access network device calculates a geographical location of the user equipment according to the calculation result, to execute a positioning process.

Optionally, when sending the preamble sequence on the unlicensed band, the user equipment may use a preconfigured physical-layer random access channel, and the preconfigured physical-layer access channel may be indicated by using a broadcast message, dedicated RRC signaling, or the random access instruction.

Optionally, after the user equipment executes the random access procedure, the radio access network device determines whether a subframe m belongs to the available subframe on the unlicensed band, and m>n+k+1. If the subframe m belongs to the available subframe on the unlicensed band, the radio access network device sends the uplink grant UL grant including the time interval to the user equipment in the subframe m by using the unlicensed band, so that the user equipment determines, according to the time interval, whether a subframe m+i falls within the time interval, and if the subframe m+i falls within the time interval, sends the uplink signal to the radio access network device in the subframe m+i by using the unlicensed band.

Optionally, in some embodiments of the present invention, before the user equipment sends the uplink signal to the radio access network device in the subframe n+i according to the uplink scheduling instruction and by using the band corresponding to the uplink scheduling instruction, the method further includes:
receiving, by the user equipment, at least one piece of control information sent by the access network device, where each piece of control information is used to indicate a subframe type of a corresponding subframe in a subframe n+1 to a subframe n+i-1, where
q is the first subframe in at least one consecutive uplink subframe, q-1 is a special subframe, n<q-1<q≤n+i, and q is an integer.

Specifically, the user equipment configures subframe types of the subframe n to the subframe n+i according to the control information sent by the radio access network device. If a subframe is configured as an uplink subframe, the user equipment may send the uplink signal in the uplink subframe. If a subframe is configured as a downlink subframe, the radio access network device may send the downlink signal in the downlink subframe. The radio access network device schedules data in the subframe n to the subframe n+i, to prevent another device from occupying the unlicensed band.

For example, it is assumed that i=6, and the subframe n to a subframe n+6 fall within the time interval on the unlicensed band preempted by the radio access network device. The radio access network device sends the UL grant to the user equipment in the subframe n by using the unlicensed band, and instructs the user equipment to send the uplink signal in the subframe n+4, that is, the subframe n is a downlink subframe. The user equipment determines that the subframe n is a downlink subframe and that the subframe n+4 is an uplink subframe, and determines whether there is another uplink subframe preceding the subframe n+4. If there is another uplink subframe preceding the subframe n+4, and the another uplink subframe is assumed as a subframe n+3, a subframe n+2 needs to be set as a special subframe or a blank subframe. If there is no uplink subframe preceding the subframe n+4, that is, it is determined that the subframe n+4 is the first uplink subframe following the subframe n, the user equipment configures the subframe n+3 as a special subframe. Because distances between user equipments and the radio access network device are different, the user equipments configure special subframes in different formats according to the different distances. For example, the user equipment configures a length of a GP in a special subframe. Lengths of GPs in special subframes of the user equipments are different, and therefore, configuration of a special subframe is more flexible.

It should be noted that a sending moment of a downlink subframe is affected by flexible scheduling performed by a base station (the radio access network device), and a user cannot perform downlink measurement in the prior art. Therefore, the base station needs to provide downlink subframe information or downlink measurement information for the user. A providing method may be: the user equipment may obtain a location of a downlink subframe according to downlink scheduling information sent by the base station; or the user may obtain a location of a downlink subframe of a cell by reading scheduling information of another user in the cell; or the user equipment may obtain a location of a downlink subframe of a cell by reading information about another UE in a D2D (device to device, end to end) manner.

In addition, in an existing LTE technology, a scheduling request SR (Scheduling Request) is used to request an uplink physical resource from the radio access network device (for example, an evolved NodeB eNB), so as to send an uplink signal.

A specific process is: the base station allocates an SR resource to UE, for example, information such as a period, a used frequency-domain location, and a time-domain location that are of the SR resource, and sends configuration information of the SR resource to the UE by using RRC.

The UE needs to transmit uplink data. After the UE triggers a conventional BSR, if there is no uplink physical resource for sending the triggered BSR, the UE triggers an SR.

If there is no configured valid SR resource for sending the SR, a random access procedure is further triggered, and the triggered SR is cancelled. Herein, the so-called valid SR resource means that the radio access network device allocates the SR resource to the UE, and the UE does not release the SR resource. Generally, after finding that uplink out-of-synchronization occurs, the UE releases the SR resource allocated by the radio access network device.

Certainly, if there is a valid SR resource, the UE sends the SR to the radio access network device by using the SR resource, to request the uplink physical resource.

However, during a handover, the foregoing process results in the following problems:

If a handover command of the radio access network device carries SR resource configuration information that needs to be used by the UE on a target side, when the UE connects to a target cell, the UE triggers the BSR and the SR by sending a handover completion message, and then finds that the UE has a valid SR resource. However, because an uplink is in a failure state when the UE just connects to the target cell, the UE actually cannot send the SR; in addition, because there is an SR resource, but the random access procedure cannot be triggered, a handover process cannot be successfully completed.

If the handover command of the radio access network device does not carry the SR resource configuration information that needs to be used by the UE on the target side, after the UE successfully connects to the target cell, the radio access network device needs to configure the SR resource for the UE, resulting in signaling overheads and a delay.

The foregoing problems also exist when the radio access network device adds a secondary cell or adds a secondary cell of a secondary radio access network device to the UE.

A third embodiment of the present invention provides an optimized scheduling request method. In this embodiment of the present invention, the method includes the following steps.

Step S301: A radio access network device such as an eNB or a cell configures an SR resource parameter for UE.

The SR resource parameter includes one or more pieces of information of a period, a time-domain location, and a frequency-domain location that are of an SR resource. Optionally, the SR resource parameter may further include an SR resource use rule parameter, for example, an SR barred timer that is used to limit a minimum interval for continuously sending SRs.

The radio access network device may send the SR resource parameter to the UE by using an RRC message, a MAC layer message, or a PHY message.

Step S302: After receiving the parameter, the UE uses the parameter.

Optionally, the UE sends a response message to the radio access network device.

Step S303: After triggering an SR, the UE determines whether there is a configured valid SR resource, and if there is no configured valid SR resource, triggers a random access procedure, or cancels the triggered SR; or if there is a configured valid SR resource, performs step S304.

Step S304: The UE determines whether the UE in an uplink synchronization state, and if the UE is in an uplink synchronization state, the UE sends the SR on the configured SR resource; or if the UE is in an uplink out-of-synchronization state or a non-synchronization state, the UE triggers the random access procedure, or cancels the triggered SR.

That the UE determines whether the UE is in an uplink synchronization state may specifically include: determining whether a primary cell or a timing advance group (Timing Advance Group) in which a primary cell is located is in a synchronization state, or determining whether a secondary cell or a timing advance group (Timing Advance Group) in which a secondary cell is located is in a synchronization state; or determining whether a secondary cell configured with a valid SR resource or a secondary cell that is of a secondary radio access network device and that is configured with a valid SR resource is in a synchronization state, or determining whether a secondary cell configured with a valid SR resource or a timing advance group in which a secondary cell that is of a secondary radio access network device and that is configured with a valid SR resource is located is in a synchronization state.

Generally, the UE determines, by determining whether a time alignment timer timeAlignmentTimer runs, whether the UE is in an uplink synchronization state. That is, alternatively, step S304 may be as follows: The UE determines whether a time alignment timer timeAlignmentTimer runs, expires, or stops, and if the time alignment timer timeAlignmentTimer is running, does not expire, or does not stop, the UE sends the SR on the configured SR resource; or if the time alignment timer timeAlignmentTimer does not run, already expires, or already stops, the UE triggers the random access procedure, or cancels the triggered SR.

The time alignment timer may be a time alignment timer of a primary cell, or the time alignment timer may be a time alignment timer of a TAG group in which a primary cell is located; or the time alignment timer may be a time alignment timer of a secondary cell, or the time alignment timer may be a time alignment timer of a TAG group in which a secondary cell is located. This is not limited in the present invention.

Alternatively, step S303 and step S304 may be replaced with the following step:

After triggering an SR, the UE determines whether there is a valid SR resource that can be sent, and if there is no valid SR resource that can be sent, triggers a random access procedure, or cancels the triggered SR; or if there is a valid SR resource that can be sent, the UE sends the SR on the valid SR resource that can be sent.

Specifically, for example, the valid SR resource that can be sent means that there is a configured valid SR resource, and the UE is in an uplink synchronization state, or the time alignment timer timeAlignmentTimer is running. Certainly, a case in which another condition also needs to be met is not excluded in the present invention.

It can be understood that the foregoing steps are applicable to an operation performed on the primary cell, that is, determining whether the primary cell or the timing advance group (Timing Advance Group) in which the primary cell is located is in a synchronization state, or determining whether the time alignment timer timeAlignmentTimer runs.

According to this embodiment in the present invention, it can be ensured that UE correctly executes a resource request process after triggering an SR. Further, a process such as a handover process or a process of adding a secondary cell or a secondary cell of a secondary radio access network device is completed, so as to reduce signaling overheads caused by reconfiguration. In addition, when a radio access network device adds the secondary cell of the secondary radio access network device to the UE, the UE performs RRC message exchange only with a primary radio access network device, that is, the UE sends, only to a cell of the primary radio access network device, a response message for adding the secondary cell of the secondary radio access network device. In this case, the UE cannot actively trigger a random access procedure to implement uplink synchronization with a cell of the secondary radio access network device, and consequently, the secondary cell of the secondary radio access network device cannot serve the UE in a timely manner.

A fourth embodiment of the present invention provides an optimized scheduling request method. In this embodiment of the present invention, the method includes the following steps.

Step S401: A radio access network device such as an eNB or a cell sends, to UE, a configuration parameter for adding or modifying a cell of a secondary radio access network device.

Adding or modifying the cell of the secondary radio access network device may be a master secondary cell (which serves the UE as a primary cell in the secondary radio access network device), or a slave secondary cell (which serves the UE as a secondary cell in the secondary radio access network device).

Optionally, the configuration parameter carries an SR resource parameter.

The SR resource parameter includes one or more pieces of information of a period, a time-domain location, and a frequency-domain location that are of an SR resource. Optionally, the SR resource parameter may further include an SR resource use rule parameter, for example, an SR barred timer that is used to limit a minimum interval for continuously sending SRs.

The radio access network device may send the configuration parameter to the UE by using an RRC message, a MAC layer message, or a PHY message.

Step S402: After receiving the parameter, the UE uses the parameter.

Optionally, the UE sends a response message to the radio access network device.

Step S403: The UE triggers an SR of the cell of the secondary radio access network device.

Specifically, a reason for triggering the SR of the cell of the secondary radio access network device by the UE includes:
after using the configuration parameter for adding or modifying the cell of the secondary radio access network device, the UE triggers a BSR of the cell of the secondary radio access network device, and the BSR further triggers the SR of the cell of the secondary radio access network device;
after using the configuration parameter for adding or modifying the cell of the secondary radio access network device, the UE generates a BSR of the cell of the secondary radio access network device, and the BSR further triggers the SR of the cell of the secondary radio access network device;
after using the configuration parameter for adding or modifying the cell of the secondary radio access network device, the UE directly triggers the SR of the cell of the secondary radio access network device; or
after using the configuration parameter for adding or modifying the cell of the secondary radio access network device, the UE directly triggers a random access procedure of the cell of the secondary radio access network device.

Step S404: For a process executed after the UE triggers the SR of the cell of the secondary radio access network device, refer to step S303 and step S304.

According to this embodiment of the present invention, UE can actively implement uplink synchronization with a cell of the secondary radio access network device in a timely manner, and obtain an uplink resource in a timely manner, so as to improve efficiency, and reduce signaling overheads.

In addition, for a physical report control channel PUCCH (Physical Uplink Control Channel) such as a periodic channel quality indicator (CQI, Channel Quality Indicator), or a periodic sounding reference channel SRS (Sounding Reference Signal), the UE directly sends these signals when handing over and adding the cell of the secondary radio access network device, and consequently, uplink interference is caused, and UE power is wasted.

Correspondingly, a fifth embodiment of the present invention provides an optimized periodic-signal sending method. In this embodiment of the present invention, the method includes the following steps.

Step S501: A radio access network device such as an eNB or a cell configures a periodic-signal resource parameter for UE.

For example, the periodic signal may be a periodic CQI, a periodic SRS, a periodic CSI, a periodic PMI, a periodic RI, or the like.

The periodic-signal resource parameter includes one or more pieces of information of a period, a time-domain location, and a frequency-domain location that are of a periodic signal resource.

The radio access network device may send the periodic-signal resource parameter to the UE by using an RRC message, a MAC layer message, or a PHY message.

Step S502: After receiving the parameter, the UE uses the parameter.

Optionally, the UE sends a response message to the radio access network device.

Step S503: The UE determines, at a location at which a periodic signal resource is configured, whether the carrier (or a cell) configured with a periodic signal resource is in an uplink synchronization state, or whether a TAG in which the carrier (or a cell) configured with a periodic signal resource is located is in an uplink synchronization state, and if the carrier or the TAG is in an uplink synchronization state, the UE sends the periodic signal.

Generally, the UE determines, by determining whether a time alignment timer timeAlignmentTimer runs, whether the UE is in an uplink synchronization state. That is, alternatively, step S503 may be as follows: The UE determines whether a time alignment timer timeAlignmentTimer of the carrier (or a cell) configured with a periodic signal resource runs, expires, or stops, and if the time alignment timer timeAlignmentTimer of the carrier (or the cell) configured with the periodic signal resource is running, does not expire, or does not stop, the UE sends the periodic signal; or the UE determines whether a time alignment timer timeAlignmentTimer of a TAG in which the carrier (or a cell) configured with a periodic signal resource is located runs, expires, or stops, and if the time alignment timer timeAlignmentTimer of the TAG in which the carrier (or the cell) configured with the periodic signal resource is located is running, does not expire, or does not stop, the UE sends the periodic signal.

According to this embodiment of the present invention, it can be ensured that UE sends a periodic signal only when the UE in an uplink synchronization state, so as to reduce power overheads of the UE, and reduce uplink interference.

Referring to FIG. 5, FIG. 5 is a schematic structural diagram of a radio access network device according to a first embodiment of the present invention. In this embodiment of the present invention, the radio access network device includes a monitoring module 10, an indication module 11, and a receiving module 12.

The monitoring module 10 is configured to: when detecting, by listening, that an unlicensed band is in an idle state, determine an available subframe on the unlicensed band, where the available subframe includes a subframe n.

The indication module 11 is configured to send an uplink scheduling instruction to user equipment in the subframe n by using the unlicensed band. The uplink scheduling instruction is used to instruct the user equipment to send an uplink signal in a subframe n+i by using the unlicensed band or a licensed band, n and i are integers, n≥0, and i≥1.

The receiving module 12 is configured to receive, in the subframe n+i by using a band corresponding to the uplink scheduling instruction, the uplink signal sent by the user equipment.

Optionally, in some embodiments of the present invention, the monitoring module 10 is configured to: determine an available time interval on the unlicensed band; and
determine the available subframe on the unlicensed band according to the time interval.

In some embodiments of the present invention, if the available subframe includes the subframe n+i, the uplink scheduling instruction is a first uplink scheduling instruction, and the first uplink scheduling instruction is used to instruct the user equipment to send the uplink signal in the subframe n+i by using the unlicensed band.

Optionally, in some embodiments of the present invention, if the available subframe does not include the frame n+i, the uplink scheduling instruction is a second uplink scheduling instruction, and the second uplink scheduling instruction is used to instruct the user equipment to send the uplink signal in the subframe n+i by using the licensed band.

Optionally, in some embodiments of the present invention, i is a predetermined value known by both the radio access network device and the user equipment; or
i is notified by the radio access network device to the user equipment by using signaling; or
i is notified to the user equipment by using the uplink scheduling instruction.

Optionally, in some embodiments of the present invention, the radio access network device further includes:
a first feedback sending module, configured to: decode the uplink signal, generate feedback information according to a decoding result, and if the available subframe includes a subframe n+i+j, send the feedback information to the user equipment in the subframe n+i+j by using the unlicensed band, where j is an integer, and j≥1.

Optionally, in some embodiments of the present invention, the radio access network device further includes:
a second feedback sending module, configured to: if the subframe n+i+j falls beyond the time interval, send the feedback information in the subframe n+i+j by using the licensed band; or
if the subframe n+i+j falls beyond the time interval, skip sending the feedback information to the user equipment in the subframe n+i+j.

Optionally, in some embodiments of the present invention, the uplink scheduling instruction includes a feedback information sending instruction, and the feedback information sending instruction is used to instruct the user equipment to receive, in the subframe n+i+j by using the unlicensed band or the licensed band, feedback information corresponding to the uplink signal.

Optionally, in some embodiments of the present invention, the radio access network device further includes:
a third feedback sending module, configured to: decode the uplink signal, and generate the feedback information according to a decoding result; and
send the feedback information to the user equipment in a subframe n+i+j by using the licensed band, where j is an integer, and j≥1.

Optionally, in some embodiments of the present invention, if the feedback information is negative acknowledgement feedback information NACK, the NACK carries a subframe number for retransmitting the uplink signal and a status identifier of the unlicensed spectrum resource in a subframe corresponding to the subframe number.

Optionally, in some embodiments of the present invention, j is a predetermined value known by both the radio access network device and the user equipment; or
j is notified by the radio access network device to the user equipment by using signaling; or
j is notified to the user equipment by using the uplink scheduling instruction.

Optionally, in some embodiments of the present invention, the uplink scheduling instruction is a random access instruction, and the uplink signal is a preamble preamble sequence; or
the uplink scheduling instruction is an uplink grant UL Grant, and the uplink signal is uplink data.

Optionally, in some embodiments of the present invention, a subframe n-k is the first full subframe within the time interval, k is an integer, and k≥0; and the radio access network device further includes:
a padding module, configured to: if a start moment of the time interval is not a frame start moment, send at least one padding padding symbol within a time period from the start moment of the time interval to a start moment of the subframe n-k.

The start moment of the time interval falls within a subframe n-k-1.

Optionally, in some embodiments of the present invention, the available subframe includes consecutive subframes: the subframe n to the subframe n+i, and i≥2.

The radio access network device further includes:
a first frame configuration module, configured to configure subframe types of the subframe n to the subframe n+i on the unlicensed spectrum for the user equipment.

If a subframe q-s is configured as the last downlink subframe preceding a subframe q, and a subframe q+t is configured as the first uplink subframe following the subframe q, a subframe q+t-1 is set as a special subframe or a blank subframe, the special subframe includes a guard interval GP, n≤q-s<q<q+t≤n+i, q, s, and t are integers, s≥1, t≥1, and i≥s+t.

Optionally, in some embodiments of the present invention, the available subframe includes consecutive subframes: the subframe n to the subframe n+i, and i≥2.

The radio access network device further includes:
a second frame configuration module, configured to configure subframe types of the subframe n to the subframe n+i on the unlicensed spectrum for the user equipment, where
q is the first subframe in at least one consecutive uplink subframe, q-1 is a special subframe, n<q-1<q≤n+i, and q is an integer.

This embodiment of the present invention and the method embodiment 1 derive from a same concept, and technical effects brought by this embodiment of the present invention and the method embodiment 1 are also the same. For details, refer to the description in the method embodiment 1. Details are not repeatedly described herein.

Referring to FIG. 6, FIG. 6 is a schematic structural diagram of user equipment according to an embodiment of the present invention. The user equipment includes an instruction receiving module 20 and an uplink sending module 21.

The instruction receiving module 20 is configured to receive, in a subframe n, an uplink scheduling instruction sent by a radio access network device by using an unlicensed band. The uplink scheduling instruction is used to instruct the user equipment to send an uplink signal in a subframe n+i by using the unlicensed band or a licensed band, n and i are integers, n≥0, and i≥1.

The uplink sending module 21 is configured to send the uplink signal to the radio access network device in the subframe n+i according to the uplink scheduling instruction and by using a band corresponding to the uplink scheduling instruction.

Optionally, in some embodiments of the present invention, the uplink sending module is configured to: if the uplink scheduling instruction is a first uplink scheduling instruction, send the uplink signal to the radio access network device in the subframe n+i by using the unlicensed band.

The first uplink scheduling instruction is used to instruct the user equipment to send the uplink signal in the subframe n+i by using the unlicensed band.

Optionally, in some embodiments of the present invention, the uplink sending module is further configured to:
if the uplink scheduling instruction is a second uplink scheduling instruction, send the uplink signal to the radio access network device in the subframe n+i by using the licensed band.

The second uplink scheduling instruction is used to instruct the user equipment to send the uplink signal in the subframe n+i by using the licensed band.

Optionally, in some embodiments of the present invention, the uplink scheduling instruction includes a duration indication, and the duration indication is used to indicate an available time interval on the unlicensed band, a quantity of an available subframe, or a number of the available subframe.

The uplink sending module is further configured to:
determine an available subframe on the unlicensed band according to the duration indication;
if the available subframe includes the subframe n+i, send the uplink signal to the radio access network device in the subframe n+i by using the unlicensed band; and/or
if the available subframe does not include the subframe n+i, send the uplink signal to the radio access network device in the subframe n+i by using the licensed band.

Optionally, in some embodiments of the present invention, i is a predetermined value known by both the radio access network device and the user equipment; or
i is notified by the radio access network device by using signaling; or
i is notified to the user equipment by using the uplink scheduling instruction.

Optionally, in some embodiments of the present invention, the uplink scheduling instruction includes a feedback information sending instruction, the feedback information sending instruction is used to instruct the user equipment to receive, in a subframe n+i+j by using the unlicensed band or the licensed band, feedback information corresponding to the uplink signal, j is an integer, and j≥1.

The user equipment further includes:
a first feedback receiving module, configured to receive the feedback information in the subframe n+i+j by using a band corresponding to the feedback information sending instruction, where j is an integer, and j≥1.

Optionally, in some embodiments of the present invention, the user equipment further includes:
a second feedback receiving module, configured to receive, in a subframe n+i+j by using the licensed band, feedback information corresponding to the uplink signal.

Optionally, in some embodiments of the present invention, the user equipment further includes:
a third feedback receiving module, configured to: if the available subframe includes a subframe n+i+j, receive, in the subframe n+i+j by using the unlicensed band, feedback information corresponding to the uplink signal; and/or
if the available subframe does not include the subframe n+i+j, receive, in the subframe n+i+j by using the licensed band, the feedback information corresponding to the uplink signal; and/or
if the available subframe does not include the subframe n+i+j, skip receiving, in the subframe n+i+j, the feedback information corresponding to the uplink signal.

Optionally, in some embodiments of the present invention, the user equipment further includes:
a retransmission module, configured to: if the feedback information is negative acknowledgement feedback information NACK, obtain a subframe number for retransmitting the uplink signal and a status identifier of the unlicensed spectrum resource in a subframe corresponding to the subframe number, where the subframe number and the status identifier are carried in the NACK; and
determine, according to the status identifier, whether the unlicensed band in the subframe corresponding to the subframe number is in an idle state, and if the unlicensed band in the subframe corresponding to the subframe number is in an idle state, retransmit, by using the unlicensed band, the uplink signal in the subframe corresponding to the subframe number.

Optionally, in some embodiments of the present invention, the uplink scheduling instruction is a random access instruction, and the uplink signal is a preamble preamble sequence; or
the uplink scheduling instruction is an uplink grant UL Grant, and the uplink signal is uplink data.

Optionally, in some embodiments of the present invention, the user equipment further includes:
a frame configuration module, configured to receive at least one piece of control information sent by the access network device, where each piece of control information is used to indicate a subframe type of a corresponding subframe in a subframe n+1 to a subframe n+i-1, where
q is the first subframe in at least one consecutive uplink subframe, q-1 is a special subframe, n<q-1<q≤n+i, and q is an integer.

This embodiment of the present invention and the method embodiment 2 derive from a same concept, and technical effects brought by this embodiment of the present invention and the method embodiment 2 are also the same. For details, refer to the description in the method embodiment 2. Details are not repeatedly described herein.

In embodiments or implementation manners of the present invention, the radio access network device may include one radio access network device, or may include multiple radio access network devices. For example, when the radio access network device includes one radio access network device, the radio access network device communicates with the UE by using both the licensed spectrum and the unlicensed spectrum, and the radio access network device may be a cellular network access device, such as an evolved NodeB eNB. When the radio access network device includes multiple radio access network devices, for example, two radio access network devices, one access network device communicates with the UE by using the licensed spectrum, and the other access network device communicates with the UE by using the unlicensed spectrum. Both the two access network devices may be cellular network access devices such as evolved NodeBs eNBs, or may include one cellular network access device and one WLAN access device.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disc, a read-only memory (Read-Only Memory, ROM), a random access memory (Random Access Memory, RAM), or the like.

## Claims

1. An uplink signal transmission method, comprising:
when detecting, by listening, that an unlicensed band is in an idle state, determining (S101), by a radio access network device, an available subframe on the unlicensed band, wherein the available subframe comprises a subframe n;
sending (S102), by the radio access network device, an uplink scheduling instruction to user equipment in the subframe n by using the unlicensed band, wherein the uplink scheduling instruction is used to instruct the user equipment to send an uplink signal in a subframe n+i by using the unlicensed band or a licensed band, n and i are integers, n≥0, and i≥1; and
receiving (S103), by the radio access network device in the subframe n+i by using a band corresponding to the uplink scheduling instruction, the uplink signal sent by the user equipment;
wherein i is notified by the radio access network device to the user equipment by using signaling; or
i is notified to the user equipment by using the uplink scheduling instruction.

2. The method according to claim 1, wherein the determining an available subframe on the unlicensed band comprises:
determining an available time interval on the unlicensed band; and
determining the available subframe on the unlicensed band according to the time interval.

3. The method according to claim 1 or 2, wherein if the available subframe comprises the subframe n+i, the uplink scheduling instruction is a first uplink scheduling instruction, and the first uplink scheduling instruction is used to instruct the user equipment to send the uplink signal in the subframe n+i by using the unlicensed band.

4. An uplink signal transmission method, comprising:
receiving (S201), by user equipment in a subframe n, an uplink scheduling instruction sent by a radio access network device by using an unlicensed band, wherein the uplink scheduling instruction is used to instruct the user equipment to send an uplink signal in a subframe n+i by using the unlicensed band or a licensed band, n and i are integers, n≥0, and i≥1; and
sending (S202), by the user equipment, the uplink signal to the radio access network device in the subframe n+i according to the uplink scheduling instruction and by using a band corresponding to the uplink scheduling instruction;
wherein i is notified by the radio access network device to the user equipment by using signaling; or
i is notified to the user equipment by using the uplink scheduling instruction.

5. The method according to claim 4, wherein the sending, by the user equipment, the uplink signal to the radio access network device in the subframe n+i according to the uplink scheduling instruction and by using a band corresponding to the uplink scheduling instruction comprises:
if the uplink scheduling instruction is a first uplink scheduling instruction, sending, by the user equipment, the uplink signal to the radio access network device in the subframe n+i by using the unlicensed band, wherein
the first uplink scheduling instruction is used to instruct the user equipment to send the uplink signal in the subframe n+i by using the unlicensed band.

6. The method according to claim 4, wherein the uplink scheduling instruction comprises a duration indication, and the duration indication is used to indicate an available time interval on the unlicensed band, a quantity of an available subframe, or a number of an available subframe; and
the sending, by the user equipment, the uplink signal to the radio access network device in the subframe n+i according to the uplink scheduling instruction and by using a band corresponding to the uplink scheduling instruction comprises:
determining, by the user equipment, an available subframe on the unlicensed band according to the duration indication;
if the available subframe comprises the subframe n+i, sending, by the user equipment, the uplink signal to the radio access network device in the subframe n+i by using the unlicensed band; and/or
if the available subframe does not comprise the subframe n+i, sending, by the user equipment, the uplink signal to the radio access network device in the subframe n+i by using the licensed band.

7. The method according to any one of claims 4 to 6, wherein the uplink scheduling instruction comprises a feedback information sending instruction, the feedback information sending instruction is used to instruct the user equipment to receive, in a subframe n+i+j by using the unlicensed band or the licensed band, feedback information corresponding to the uplink signal, j is an integer, and j≥1; and
the method further comprises:
receiving, by the user equipment, the feedback information in the subframe n+i+j by using a band corresponding to the feedback information sending instruction, wherein j is an integer, and j≥1.

8. A radio access network device, comprising:
a monitoring module (10), configured to: when detecting, by listening, that an unlicensed band is in an idle state, determine an available subframe on the unlicensed band, wherein the available subframe comprises a subframe n;
an indication module (11), configured to send an uplink scheduling instruction to user equipment in the subframe n by using the unlicensed band, wherein the uplink scheduling instruction is used to instruct the user equipment to send an uplink signal in a subframe n+i by using the unlicensed band or a licensed band, n and i are integers, n≥0, and i≥1; and
a receiving module (12), configured to receive, in the subframe n+i by using a band corresponding to the uplink scheduling instruction, the uplink signal sent by the user equipment;
wherein i is notified by the radio access network device to the user equipment by using signaling; or
i is notified to the user equipment by using the uplink scheduling instruction.

9. The device according to claim 8, wherein the monitoring module is configured to:
determine an available time interval on the unlicensed band; and
determine the available subframe on the unlicensed band according to the time interval.

10. The device according to claim 8 or 9, wherein if the available subframe comprises the subframe n+i, the uplink scheduling instruction is a first uplink scheduling instruction, and the first uplink scheduling instruction is used to instruct the user equipment to send the uplink signal in the subframe n+i by using the unlicensed band.

11. The device according to any one of claims 8 to 10, further comprising:
a first feedback sending module, configured to: decode the uplink signal, generate feedback information according to a decoding result, and if the available subframe comprises a subframe n+i+j, send the feedback information to the user equipment in the subframe n+i+j by using the unlicensed band, wherein j is an integer, and j≥1.

12. User equipment, comprising:
an instruction receiving module (20), configured to receive, in a subframe n, an uplink scheduling instruction sent by a radio access network device by using an unlicensed band, wherein the uplink scheduling instruction is used to instruct the user equipment to send an uplink signal in a subframe n+i by using the unlicensed band or a licensed band, n and i are integers, n≥0, and i≥1; and
an uplink sending module (21), configured to send the uplink signal to the radio access network device in the subframe n+i according to the uplink scheduling instruction and by using a band corresponding to the uplink scheduling instruction;
wherein i is notified by the radio access network device to the user equipment by using signaling; or
i is notified to the user equipment by using the uplink scheduling instruction.

13. The user equipment according to claim 12, wherein the uplink sending module is configured to: if the uplink scheduling instruction is a first uplink scheduling instruction, send the uplink signal to the radio access network device in the subframe n+i by using the unlicensed band, wherein
the first uplink scheduling instruction is used to instruct the user equipment to send the uplink signal in the subframe n+i by using the unlicensed band.

14. The user equipment according to claim 12, wherein the uplink scheduling instruction comprises a duration indication, and the duration indication is used to indicate an available time interval on the unlicensed band, a quantity of an available subframe, or a number of an available subframe; and
the uplink sending module is further configured to:
determine an available subframe on the unlicensed band according to the duration indication;
if the available subframe comprises the subframe n+i, send the uplink signal to the radio access network device in the subframe n+i by using the unlicensed band; and/or
if the available subframe does not comprise the subframe n+i, send the uplink signal to the radio access network device in the subframe n+i by using the licensed band.

15. The user equipment according to any one of claims 12 to 14, wherein the uplink scheduling instruction comprises a feedback information sending instruction, the feedback information sending instruction is used to instruct the user equipment to receive, in a subframe n+i+j by using the unlicensed band or the licensed band, feedback information corresponding to the uplink signal, j is an integer, and j≥1; and
the user equipment further comprises:
a first feedback receiving module, configured to receive the feedback information in the subframe n+i+j by using a band corresponding to the feedback information sending instruction, wherein j is an integer, and j≥1.

## Patentansprüche

1. Aufwärtssignalübertragungsverfahren, das Folgendes umfasst:
wenn durch Hören detektiert wird, dass sich ein nicht lizenziertes Band in einem inaktiven Zustand befindet, Bestimmen (S101) durch eine Funkzugangsnetzwerkvorrichtung eines verfügbaren Unterrahmens im nicht lizenzierten Band, wobei der verfügbare Unterrahmen einen Unterrahmen n umfasst;
Senden (S102) durch die Funkzugangsnetzwerkvorrichtung einer Aufwärtsplanungsanweisung an eine Teilnehmereinrichtung im Unterrahmen n unter Verwendung eines nicht lizenzierten Bandes, wobei die Aufwärtsplanungsanweisung verwendet wird, um die Teilnehmereinrichtung anzuweisen, ein Aufwärtssignal in einem Unterrahmen n+i unter Verwendung des nicht lizenzierten Bandes oder eines lizenzierten Bandes zu senden, n und i Ganzzahlen sind, n≥0 und i≥1; und
Empfangen (S103) durch die Funkzugangsnetzwerkvorrichtung im Unterrahmen n+i unter Verwendung eines Bandes, das der Aufwärtsplanungsanweisung entspricht, des von der Teilnehmereinrichtung gesendeten Aufwärtssignals;
wobei i der Teilnehmereinrichtung unter Verwendung einer Signalisierung von der Funkzugangsnetzwerkvorrichtung mitgeteilt wird; oder
i der Teilnehmereinrichtung unter Verwendung der Aufwärtsplanungsanweisung mitgeteilt wird.

2. Verfahren nach Anspruch 1, wobei das Bestimmen eines verfügbaren Unterrahmens im nicht lizenzierten Band Folgendes umfasst:
Bestimmen eines verfügbaren Zeitintervalls im nicht lizenzierten Band; und
Bestimmen des verfügbaren Unterrahmens im nicht lizenzierten Band gemäß dem Zeitintervall.

3. Verfahren nach Anspruch 1 oder 2, wobei, wenn der verfügbare Unterrahmen den Unterrahmen n+i umfasst, die Aufwärtsplanungsanweisung eine erste Aufwärtsplanungsanweisung ist und die erste Aufwärtsplanungsanweisung verwendet wird, um die Teilnehmereinrichtung anzuweisen, das Aufwärtssignal im Unterrahmen n+i unter Verwendung des nicht lizenzierten Bandes zu senden.

4. Aufwärtssignalübertragungsverfahren, das Folgendes umfasst:
Empfangen (S201) durch eine Teilnehmereinrichtung in einem Unterrahmen n einer Aufwärtsplanungsanweisung, die von einer Funkzugangsnetzwerkvorrichtung unter Verwendung eines nicht lizenzierten Bandes gesendet wurde, wobei die Aufwärtsplanungsanweisung verwendet wird, um die Teilnehmereinrichtung anzuweisen, ein Aufwärtssignal in einem Unterrahmen n+i unter Verwendung des nicht lizenzierten Bandes oder eines lizenzierten Bandes zu senden, n und i Ganzzahlen sind, n≥0 und i≥1; und
Senden (S202) durch die Teilnehmereinrichtung des Aufwärtssignals an die Funkzugangsnetzwerkvorrichtung im Unterrahmen n+i gemäß der Aufwärtsplanungsanweisung und unter Verwendung eines Bandes, das der Aufwärtsplanungsanweisung entspricht;
wobei i der Teilnehmereinrichtung unter Verwendung einer Signalisierung von der Funkzugangsnetzwerkvorrichtung mitgeteilt wird; oder
i der Teilnehmereinrichtung unter Verwendung der Aufwärtsplanungsanweisung mitgeteilt wird.

5. Verfahren nach Anspruch 4, wobei das Senden durch die Teilnehmereinrichtung des Aufwärtssignals an die Funkzugangsnetzwerkvorrichtung im Unterrahmen n+i gemäß der Aufwärtsplanungsanweisung und unter Verwendung eines Bandes, das der Aufwärtsplanungsanweisung entspricht, Folgendes umfasst:
wenn die Aufwärtsplanungsanweisung eine erste Aufwärtsplanungsanweisung ist, Senden durch die Teilnehmereinrichtung des Aufwärtssignals an die Funkzugangsnetzwerkvorrichtung im Unterrahmen n+i unter Verwendung des nicht lizenzierten Bandes, wobei
die erste Aufwärtsplanungsanweisung verwendet wird, um die Teilnehmereinrichtung anzuweisen, das Aufwärtssignal im Unterrahmen n+i unter Verwendung des nicht lizenzierten Bandes zu senden.

6. Verfahren nach Anspruch 4, wobei die Aufwärtsplanungsanweisung eine Daueranzeige umfasst und die Daueranzeige verwendet wird, um ein verfügbares Zeitintervall im nicht lizenzierten Band, eine Menge eines verfügbaren Unterrahmens oder eine Anzahl eines verfügbaren Unterrahmens anzuzeigen; und
das Senden durch die Teilnehmereinrichtung des Aufwärtssignals an die Funkzugangsnetzwerkvorrichtung im Unterrahmen n+i gemäß der Aufwärtsplanungsanweisung und unter Verwendung eines Bandes, das der Aufwärtsplanungsanweisung entspricht, Folgendes umfasst:
Bestimmen durch die Teilnehmereinrichtung eines verfügbaren Unterrahmens im nicht lizenzierten Band gemäß der Daueranzeige;
wenn der verfügbare Unterrahmen den Unterrahmen n+i umfasst, Senden durch die Teilnehmereinrichtung des Aufwärtssignals an die Funkzugangsnetzwerkvorrichtung im Unterrahmen n+i unter Verwendung des nicht lizenzierten Bandes; und/oder wenn der verfügbare Unterrahmen den Unterrahmen n+i nicht umfasst, Senden durch die Teilnehmereinrichtung des Aufwärtssignals an die Funkzugangsnetzwerkvorrichtung im Unterrahmen n+i unter Verwendung des lizenzierten Bandes.

7. Verfahren nach einem der Ansprüche 4 bis 6, wobei die Aufwärtsplanungsanweisung eine Rückmeldungsinformationssendeanweisung umfasst, die Rückmeldungsinformationssendeanweisung verwendet wird, um die Teilnehmereinrichtung anzuweisen, unter Verwendung des nicht lizenzierten Bandes oder des lizenzierten Bandes in einem Unterrahmen n+i+j Rückmeldungsinformationen, die dem Aufwärtssignal entsprechen, zu senden, j eine Ganzzahl ist und j≥1; und
das Verfahren ferner Folgendes umfasst:
Empfangen durch die Teilnehmereinrichtung der Rückmeldungsinformationen im Unterrahmen n+i+j unter Verwendung eines Bandes, das der Rückmeldungsinformationssendeanweisung entspricht, wobei j eine Ganzzahl ist und J≥1.

8. Funkzugangsnetzwerkvorrichtung, die Folgendes umfasst:
ein Überwachungsmodul (10), das zu Folgendem ausgelegt ist: wenn durch Hören detektiert wird, dass sich ein nicht lizenziertes Band in einem inaktiven Zustand befindet, Bestimmen eines verfügbaren Unterrahmens im nicht lizenzierten Band, wobei der verfügbare Unterrahmen einen Unterrahmen n umfasst;
ein Anzeigemodul (11), das dazu ausgelegt ist, unter Verwendung eines nicht lizenzierten Bandes eine Aufwärtsplanungsanweisung an eine Teilnehmereinrichtung im Unterrahmen n zu senden, wobei die Aufwärtsplanungsanweisung verwendet wird, um die Teilnehmereinrichtung anzuweisen, ein Aufwärtssignal in einem Unterrahmen n+i unter Verwendung des nicht lizenzierten Bandes oder eines lizenzierten Bandes zu senden, n und i Ganzzahlen sind, n≥0 und i≥1; und
ein Empfangsmodul (12), das dazu ausgelegt ist, unter Verwendung eines Bandes, das der Aufwärtsplanungsanweisung entspricht, im Unterrahmen n+i das von der Teilnehmereinrichtung gesendete Aufwärtssignal zu empfangen;
wobei i der Teilnehmereinrichtung unter Verwendung einer Signalisierung von der Funkzugangsnetzwerkvorrichtung mitgeteilt wird; oder
i der Teilnehmereinrichtung unter Verwendung der Aufwärtsplanungsanweisung mitgeteilt wird.

9. Vorrichtung nach Anspruch 8, wobei das Überwachungsmodul zu Folgendem ausgelegt ist: Bestimmen eines verfügbaren Zeitintervalls im nicht lizenzierten Band; und
Bestimmen des verfügbaren Unterrahmens im nicht lizenzierten Band gemäß dem Zeitintervall.

10. Vorrichtung nach Anspruch 8 oder 9, wobei, wenn der verfügbare Unterrahmen den Unterrahmen n+i umfasst, die Aufwärtsplanungsanweisung eine erste Aufwärtsplanungsanweisung ist und die erste Aufwärtsplanungsanweisung verwendet wird, um die Teilnehmereinrichtung anzuweisen, das Aufwärtssignal im Unterrahmen n+i unter Verwendung des nicht lizenzierten Bandes zu senden.

11. Vorrichtung nach einem der Ansprüche 8 bis 10, die ferner Folgendes umfasst:
ein erstes Rückmeldungssendemodul, das zu Folgendem ausgelegt ist: Decodieren des Aufwärtssignals, Erzeugen von Rückmeldungsinformationen gemäß einem Decodierungsergebnis und, wenn der verfügbare Unterrahmen einen Unterrahmen n+i+j umfasst, Senden der Rückmeldungsinformationen unter Verwendung des nicht lizenzierten Bandes an die Teilnehmereinrichtung im Unterrahmen n+i+j, wobei j eine Ganzzahl ist und J≥1.

12. Teilnehmereinrichtung, die Folgendes umfasst:
ein Anweisungsempfangsmodul (20), das dazu ausgelegt ist, in einem Unterrahmen n eine Aufwärtsplanungsanweisung zu empfangen, die von einer Funkzugangsnetzwerkvorrichtung unter Verwendung eines nicht lizenzierten Bandes gesendet wurde, wobei die Aufwärtsplanungsanweisung verwendet wird, um die Teilnehmereinrichtung anzuweisen, ein Aufwärtssignal in einem Unterrahmen n+i unter Verwendung des nicht lizenzierten Bandes oder eines lizenzierten Bandes zu senden, n und i Ganzzahlen sind, n≥0 und i≥1; und
ein Aufwärtssendemodul (21), das dazu ausgelegt ist, im Unterrahmen n+i gemäß der Aufwärtsplanungsanweisung und unter Verwendung eines Bandes, das der Aufwärtsplanungsanweisung entspricht, das Aufwärtssignal an die Funkzugangsnetzwerkvorrichtung zu senden;
wobei i der Teilnehmereinrichtung unter Verwendung einer Signalisierung von der Funkzugangsnetzwerkvorrichtung mitgeteilt wird; oder
i der Teilnehmereinrichtung unter Verwendung der Aufwärtsplanungsanweisung mitgeteilt wird.

13. Teilnehmereinrichtung nach Anspruch 12, wobei das Aufwärtssendemodul zu Folgendem ausgelegt ist: Wenn die Aufwärtsplanungsanweisung eine erste Aufwärtsplanungsanweisung ist, Senden des Aufwärtssignals an die Funkzugangsnetzwerkvorrichtung im Unterrahmen n+i unter Verwendung des nicht lizenzierten Bandes, wobei
die erste Aufwärtsplanungsanweisung verwendet wird, um die Teilnehmereinrichtung anzuweisen, das Aufwärtssignal im Unterrahmen n+i unter Verwendung des nicht lizenzierten Bandes zu senden.

14. Teilnehmereinrichtung nach Anspruch 12, wobei die Aufwärtsplanungsanweisung eine Daueranzeige umfasst und die Daueranzeige verwendet wird, um ein verfügbares Zeitintervall im nicht lizenzierten Band, eine Menge eines verfügbaren Unterrahmens oder eine Anzahl eines verfügbaren Unterrahmens anzuzeigen; und das Aufwärtssendemodul ferner zu Folgendem ausgelegt ist:
Bestimmen eines verfügbaren Unterrahmens im nicht lizenzierten Band gemäß der Daueranzeige;
wenn der verfügbare Unterrahmen den Unterrahmen n+i umfasst, Senden des Aufwärtssignals an die Funkzugangsnetzwerkvorrichtung im Unterrahmen n+i unter Verwendung des nicht lizenzierten Bandes; und/oder
wenn der verfügbare Unterrahmen den Unterrahmen n+i nicht umfasst, Senden des Aufwärtssignals an die Funkzugangsnetzwerkvorrichtung im Unterrahmen n+i unter Verwendung des lizenzierten Bandes.

15. Teilnehmereinrichtung nach einem der Ansprüche 12 bis 14, wobei die Aufwärtsplanungsanweisung eine Rückmeldungsinformationssendeanweisung umfasst, die Rückmeldungsinformationssendeanweisung verwendet wird, um die Teilnehmereinrichtung anzuweisen, unter Verwendung des nicht lizenzierten Bandes oder des lizenzierten Bandes in einem Unterrahmen n+i+j Rückmeldungsinformationen, die dem Aufwärtssignal entsprechen, zu senden, j eine Ganzzahl ist und j≥1; und
die Teilnehmereinrichtung ferner Folgendes umfasst:
ein erstes Rückmeldungsempfangsmodul, das dazu ausgelegt ist, die Rückmeldungsinformationen im Unterrahmen n+i+j unter Verwendung eines Bandes, das der Rückmeldungsinformationssendeanweisung entspricht, zu empfangen, wobei j eine Ganzzahl ist und J≥1.

## Revendications

1. Procédé de transmission de signaux en liaison montante, consistant à :
quand il est détecté, par écoute, qu'une bande non autorisée est dans un état de repos, déterminer (S101), par un dispositif de réseau d'accès radio, une sous-trame disponible sur la bande non autorisée, la sous-trame disponible comprenant une sous-trame n ;
envoyer (S102), par le dispositif de réseau d'accès radio, une instruction de planification en liaison montante à un équipement d'utilisateur dans la sous-trame n en utilisant la bande non autorisée, l'instruction de planification en liaison montante étant utilisée pour donner l'instruction à l'équipement d'utilisateur d'envoyer un signal en liaison montante dans une sous-trame n+i en utilisant la bande non autorisée ou une bande autorisée, n et i étant des entiers, n≥0 et i≥1 ; et
recevoir (S103), par le dispositif de réseau d'accès radio dans la sous-trame n+i en utilisant une bande correspondant à l'instruction de planification en liaison montante, le signal en liaison montante envoyé par l'équipement d'utilisateur ;
i étant notifié par le dispositif de réseau d'accès radio à l'équipement d'utilisateur au moyen d'une signalisation ; ou
i étant notifié à l'équipement d'utilisateur au moyen de l'instruction de planification en liaison montante.

2. Procédé selon la revendication 1, dans lequel la détermination d'une sous-trame disponible sur la bande non autorisée consiste à :
déterminer un intervalle de temps disponible sur la bande non autorisée ; et
déterminer la sous-trame disponible sur la bande non autorisée selon l'intervalle de temps.

3. Procédé selon la revendication 1 ou 2, dans lequel, si la sous-trame disponible comprend la sous-trame n+i, l'instruction de planification en liaison montante est une première instruction de planification en liaison montante, et la première instruction de planification en liaison montante est utilisée pour donner l'instruction à l'équipement d'utilisateur d'envoyer le signal en liaison montante dans la sous-trame n+i en utilisant la bande non autorisée.

4. Procédé de transmission de signaux en liaison montante, consistant à :
recevoir (S201), par un équipement d'utilisateur dans une sous-trame n, une instruction de planification en liaison montante envoyée par un dispositif de réseau d'accès radio en utilisant une bande non autorisée, l'instruction de planification en liaison montante étant utilisée pour donner l'instruction à l'équipement d'utilisateur d'envoyer un signal en liaison montante dans une sous-trame n+i en utilisant la bande non autorisée ou une bande autorisée, n et i étant des entiers, n≥0 et i≥1 ; et
envoyer (S202), par l'équipement d'utilisateur, le signal en liaison montante au dispositif de réseau d'accès radio dans la sous-trame n+i selon l'instruction de planification en liaison montante et en utilisant une bande correspondant à l'instruction de planification en liaison montante ;
i étant notifié par le dispositif de réseau d'accès radio à l'équipement d'utilisateur au moyen d'une signalisation ; ou
i étant notifié à l'équipement d'utilisateur au moyen de l'instruction de planification en liaison montante.

5. Procédé selon la revendication 4, dans lequel l'envoi, par l'équipement d'utilisateur, du signal en liaison montante au dispositif de réseau d'accès radio dans la sous-trame n+i selon l'instruction de planification en liaison montante et en utilisant une bande correspondant à l'instruction de planification en liaison montante, consiste à :
si l'instruction de planification en liaison montante est une première instruction de planification en liaison montante, envoyer, par l'équipement d'utilisateur, le signal en liaison montante au dispositif de réseau d'accès radio dans la sous-trame n+i en utilisant la bande non autorisée,
la première instruction de planification en liaison montante étant utilisée pour donner l'instruction à l'équipement d'utilisateur d'envoyer le signal en liaison montante dans la sous-trame n+i en utilisant la bande non autorisée.

6. Procédé selon la revendication 4, dans lequel l'instruction de planification en liaison montante comprend une indication de durée, et l'indication de durée est utilisée pour indiquer un intervalle de temps disponible sur la bande non autorisée, une quantité d'une sous-trame disponible ou un nombre d'une sous-trame disponible ; et
l'envoi, par l'équipement d'utilisateur, du signal en liaison montante au dispositif de réseau d'accès radio dans la sous-trame n+i selon l'instruction de planification en liaison montante et en utilisant une bande correspondant à l'instruction de planification en liaison montante, consiste à :
déterminer, par l'équipement d'utilisateur, la sous-trame disponible sur la bande non autorisée selon l'indication de durée ;
si la sous-trame disponible comprend la sous-trame n+i, envoyer, par l'équipement d'utilisateur, le signal en liaison montante au dispositif de réseau d'accès radio dans la sous-trame n+i en utilisant la bande non autorisée ; et/ou
si la sous-trame disponible ne comprend pas la sous-trame n+i, envoyer, par l'équipement d'utilisateur, le signal en liaison montante au dispositif de réseau d'accès radio dans la sous-trame n+i en utilisant la bande autorisée.

7. Procédé selon l'une quelconque des revendications 4 à 6, dans lequel l'instruction de planification en liaison montante comprend une instruction d'envoi d'information de retour, l'instruction d'envoi d'information de retour étant utilisée pour donner l'instruction à l'équipement d'utilisateur de recevoir, dans une sous-trame n+i+j en utilisant la bande non autorisée ou la bande autorisée, une information de retour correspondant au signal en liaison montante, j étant un entier, et j≥1 ; et
le procédé consistant en outre à :
recevoir, par l'équipement d'utilisateur, l'information de retour dans la sous-trame n+i+j en utilisant une bande correspondant à l'instruction d'envoi d'information de retour, j étant un entier, et j≥1.

8. Dispositif de réseau d'accès radio, comprenant :
un module de surveillance (10), configuré pour : quand il est détecté, par écoute, qu'une bande non autorisée est dans un état de repos, déterminer une sous-trame disponible sur la bande non autorisée, la sous-trame disponible comprenant une sous-trame n ;
un module d'indication (11), configuré pour envoyer une instruction de planification en liaison montante à un équipement d'utilisateur dans la sous-trame n en utilisant la bande non autorisée, l'instruction de planification en liaison montante étant utilisée pour donner l'instruction à l'équipement d'utilisateur d'envoyer un signal en liaison montante dans une sous-trame n+i en utilisant la bande non autorisée ou une bande autorisée, n et i étant des entiers, n≥0 et i≥1 ; et
un module de réception (12), configuré pour recevoir, dans la sous-trame n+i en utilisant une bande correspondant à l'instruction de planification en liaison montante, le signal en liaison montante envoyé par l'équipement d'utilisateur ;
i étant notifié par le dispositif de réseau d'accès radio à l'équipement d'utilisateur au moyen d'une signalisation ; ou
i étant notifié à l'équipement d'utilisateur au moyen de l'instruction de planification en liaison montante.

9. Dispositif selon la revendication 8, dans lequel le module de surveillance est configuré pour :
déterminer un intervalle de temps disponible sur la bande non autorisée ; et
déterminer la sous-trame disponible sur la bande non autorisée selon l'intervalle de temps.

10. Dispositif selon la revendication 8 ou 9, dans lequel, si la sous-trame disponible comprend la sous-trame n+i, l'instruction de planification en liaison montante est une première instruction de planification en liaison montante, et la première instruction de planification en liaison montante est utilisée pour donner l'instruction à l'équipement d'utilisateur d'envoyer le signal en liaison montante dans la sous-trame n+i en utilisant la bande non autorisée.

11. Dispositif selon l'une quelconque des revendications 8 à 10, comprenant en outre :
un premier module d'envoi de retour, configuré pour : décoder le signal en liaison montante, générer une information de retour selon un résultat de décodage, et si la sous-trame disponible comprend une sous-trame n+i+j, envoyer l'information de retour à l'équipement d'utilisateur dans la sous-trame n+i+j en utilisant la bande non autorisée, j étant un entier, et j≥1.

12. Équipement d'utilisateur, comprenant :
un module de réception d'instruction (20), configuré pour recevoir, dans une sous-trame n, une instruction de planification en liaison montante envoyée par un dispositif de réseau d'accès radio en utilisant une bande non autorisée, l'instruction de planification en liaison montante étant utilisée pour donner l'instruction à l'équipement d'utilisateur d'envoyer un signal en liaison montante dans une sous-trame n+i en utilisant la bande non autorisée ou une bande autorisée, n et i étant des entiers, n≥0 et i≥1 ; et
un module d'envoi en liaison montante (21), configuré pour envoyer le signal en liaison montante au dispositif de réseau d'accès radio dans la sous-trame n+i selon l'instruction de planification en liaison montante et en utilisant une bande correspondant à l'instruction de planification en liaison montante ;
i étant notifié par le dispositif de réseau d'accès radio à l'équipement d'utilisateur au moyen d'une signalisation ; ou
i étant notifié à l'équipement d'utilisateur au moyen de l'instruction de planification en liaison montante.

13. Équipement d'utilisateur selon la revendication 12, dans lequel le module d'envoi en liaison montante est configuré pour : si l'instruction de planification en liaison montante est une première instruction de planification en liaison montante, envoyer le signal en liaison montante au dispositif de réseau d'accès radio dans la sous-trame n+i en utilisant la bande non autorisée,
la première instruction de planification en liaison montante étant utilisée pour donner l'instruction à l'équipement d'utilisateur d'envoyer le signal en liaison montante dans la sous-trame n+i en utilisant la bande non autorisée.

14. Équipement d'utilisateur selon la revendication 12, dans lequel l'instruction de planification en liaison montante comprend une indication de durée, et l'indication de durée est utilisée pour indiquer un intervalle de temps disponible sur la bande non autorisée, une quantité d'une sous-trame disponible ou un nombre d'une sous-trame disponible ; et
le module d'envoi en liaison montante est en outre configuré pour :
déterminer une sous-trame disponible sur la bande non autorisée selon l'indication de durée ;
si la sous-trame disponible comprend la sous-trame n+i, envoyer le signal en liaison montante au dispositif de réseau d'accès radio dans la sous-trame n+i en utilisant la bande non autorisée ; et/ou
si la sous-trame disponible ne comprend pas la sous-trame n+i, envoyer le signal en liaison montante au dispositif de réseau d'accès radio dans la sous-trame n+i en utilisant la bande autorisée.

15. Équipement d'utilisateur selon l'une quelconque des revendications 12 à 14, dans lequel l'instruction de planification en liaison montante comprend une instruction d'envoi d'information de retour, l'instruction d'envoi d'information de retour étant utilisée pour donner l'instruction à l'équipement d'utilisateur de recevoir, dans une sous-trame n+i+j en utilisant la bande non autorisée ou la bande autorisée, une information de retour correspondant au signal en liaison montante, j étant un entier, et j≥1 ; et
l'équipement d'utilisateur comprend en outre :
un premier module de réception de retour, configuré pour recevoir l'information de retour dans la sous-trame n+i+j en utilisant une bande correspondant à l'instruction d'envoi d'information de retour, j étant un entier, et j≥1.
